# EUROPEAN PATENT APPLICATION

(11) **EP 4 841 575 A1**
(43) Date of publication of application: **18.11.2026**
(21) Application number: 25840303.9
(22) Date of filing: 09.07.2025
(51) Int. Cl.: G06T 15/50

(54) **MODEL RENDERING METHOD AND RELATED APPARATUS**

(30) Priority: 15.07.2024 CN 202410947204
(71) Applicant: Tencent Technology (Shenzhen) Company Limited, Shenzhen, Guangdong 518057 (CN)
(72) Inventor: XU, Dong, Shenzhen, Guangdong 518057 (CN)
(74) Representative: Nederlandsch Octrooibureau
(86) International application number: PCT/CN2025/107619
(87) International publication number: WO 2026/016940

(57) **Abstract**

Disclosed in the embodiments of the present application are a model rendering method and a related apparatus. The method comprises: for an initial three-dimensional model to be processed, simplifying the model structure of the initial three-dimensional model on the basis of a topological structure feature of the initial three-dimensional model, so as to obtain a simplified three-dimensional model, wherein the number of meshes comprised in the simplified three-dimensional model is less than the number of meshes comprised in the initial three-dimensional model, and the difference between the simplified three-dimensional model and the initial three-dimensional model meets a preset similarity requirement; by means of lighting simulation processing, determining a lighting intensity corresponding to a vertex in the simplified three-dimensional model when the simplified three-dimensional model is in a virtual environment; and on the basis of the simplified three-dimensional model and the lighting intensity corresponding to the vertex in the simplified three-dimensional model, rendering the simplified three-dimensional model, so as to obtain a model image for representing the simplified three-dimensional model. The method can automatically reconstruct and render a three-dimensional model, thereby improving the reconstruction efficiency of the three-dimensional model and reducing labor costs.

## Description

This application claims priority to Chinese Patent Application No. 202410947204X, filed with the China National Intellectual Property Administration on July 15, 2024 and entitled "MODEL RENDERING METHOD AND RELATED APPARATUS", which is incorporated herein by reference in its entirety.

### FIELD OF THE TECHNOLOGY

This application relates to the field of computer technologies, and in particular, to model rendering.

### BACKGROUND OF THE DISCLOSURE

A three-dimensional (3D) model is a three-dimensional model constructed using three-dimensional software. Because the three-dimensional model can flexibly represent various real-world objects and fictional objects, the three-dimensional model is widely used in various fields, such as a game, medical treatment, film and television production, engineering design, and the like.

During practical application, rendering of the three-dimensional model often fails due to factors such as the three-dimensional model being too complex. In this case, two-dimensional image information of a basic object on which the three-dimensional model is based usually needs to be collected. Then, based on related theories of model enhancement rendering, outline information of the basic object is manually reconstructed according to the collected two-dimensional image information, to reconstruct a corresponding three-dimensional model.

However, in the foregoing manner, often a relatively long time needs to be spent on reconstructing a new three-dimensional model that can be successfully rendered. That is, reconstruction efficiency of the three-dimensional model is relatively low, and required labor costs are relatively high.

### SUMMARY

Embodiments of this application provide a model rendering method and a related apparatus, to automatically reconstruct and render a three-dimensional model, thereby improving reconstruction efficiency of the three-dimensional model, and reducing labor costs.

A first aspect of this application provides a model rendering method. The method includes:
performing, based on a topological feature of an initial three-dimensional model, simplification processing on the initial three-dimensional model by reducing a model mesh quantity, to obtain a simplified three-dimensional model, the simplified three-dimensional model and the initial three-dimensional model satisfying a preset similarity requirement;
determining, through illumination simulation processing when the simplified three-dimensional model is in a preset virtual environment, an illumination intensity corresponding to a vertex in the simplified three-dimensional model; and
rendering the simplified three-dimensional model based on the simplified three-dimensional model and the illumination intensity, to obtain a model image corresponding to the simplified three-dimensional model.

A second aspect of this application provides a model rendering apparatus. The apparatus includes:
a simplification module, configured to perform, based on a topological feature of an initial three-dimensional model, simplification processing on the initial three-dimensional model by reducing a model mesh quantity, to obtain a simplified three-dimensional model, the simplified three-dimensional model and the initial three-dimensional model satisfying a preset similarity requirement;
an illumination simulation module, configured to determine, through illumination simulation processing when the simplified three-dimensional model is in a preset virtual environment, an illumination intensity corresponding to a vertex in the simplified three-dimensional model; and
a rendering module, configured to render the simplified three-dimensional model based on the simplified three-dimensional model and the illumination intensity, to obtain a model image corresponding to the simplified three-dimensional model.

A third aspect of this application provides a computer device. The device includes a processor and a memory;
the memory being configured to store a computer program; and
the processor being configured to perform, according to the computer program, operations of the model rendering method as described in the first aspect.

A fourth aspect of this application provides a computer-readable storage medium, the computer-readable storage medium being configured to store a computer program, and the computer program being configured to perform operations of the model rendering method as described in the first aspect.

A fifth aspect of this application provides a computer program product including a computer program. When the computer program product is run on a computer, the computer is enabled to perform the method according to the foregoing aspects.

It can be learnt from the foregoing technical solutions that the embodiments of this application have the following advantages:

An embodiment of this application provides a model rendering method. The method innovatively provides a solution of implementing model enhancement rendering based on an existing three-dimensional model. The method includes: first, for a to-be-processed initial three-dimensional model, performing, based on a topological feature of the initial three-dimensional model, simplification processing on the initial three-dimensional model by reducing a model mesh quantity, to obtain a simplified three-dimensional model including a smaller mesh quantity than the initial three-dimensional model. Because model complexity of the simplified three-dimensional model is relatively lower, it is easier to successfully complete rendering when the simplified three-dimensional model is subsequently rendered, that is, a model rendering success rate can be improved. In addition, to ensure a rendering effect of the simplified three-dimensional model, the simplified three-dimensional model and the initial three-dimensional model need to satisfy a preset similarity requirement, to ensure that appearance of the simplified three-dimensional model is similar to that of the initial three-dimensional model as much as possible, further ensure that a rendering effect of the simplified three-dimensional model is similar to that of the initial three-dimensional model, and avoid distortion caused by the simplification processing. Then, an illumination intensity corresponding to a vertex in the simplified three-dimensional model may be determined through illumination simulation processing when the simplified three-dimensional model is in a preset virtual environment, that is, an illumination effect is simulated when the simplified three-dimensional model is in the preset virtual environment. The illumination effect may help improve a rendering effect in a subsequent rendering process, so that a finally obtained rendering effect is more vivid. Finally, rendering is performed on the simplified three-dimensional model based on the simplified three-dimensional model and the illumination effect (namely, the illumination intensity corresponding to the vertex in the simplified three-dimensional model) that is obtained when the simplified three-dimensional model is in the preset virtual environment, to obtain a model image corresponding to the simplified three-dimensional model; and model rendering is performed based on a processing result obtained through the foregoing simplification processing and illumination simulation processing, to ensure a relatively high rendering success rate, and ensure that a relatively good rendering effect is obtained. The rendering effect is similar to an expected rendering effect of the initial three-dimensional model. Therefore, in the foregoing method, model enhancement rendering can be automatically completed based on the original initial three-dimensional model, and model reconstruction and rendering do not need to be manually performed again based on a two-dimensional image, thereby improving reconstruction efficiency of the three-dimensional model and reducing labor costs.

### BRIEF DESCRIPTION OF THE DRAWINGS

FIG. 1 is a schematic diagram of an application scenario of a model rendering method according to an embodiment of this application.
FIG. 2 is a schematic flowchart of a model rendering method according to an embodiment of this application.
FIG. 3 is a schematic flowchart of a simplification processing process according to an embodiment of this application.
FIG. 4 is a schematic diagram of determining an importance evaluation result of a sub-model region according to an embodiment of this application.
FIG. 5 is a schematic structural diagram of a difference measurement processing process according to an embodiment of this application.
FIG. 6 is a schematic structural diagram of another difference measurement processing process according to an embodiment of this application.
FIG. 7 is a schematic flowchart of an illumination simulation processing process according to an embodiment of this application.
FIG. 8 is a schematic structural diagram of a model rendering apparatus according to an embodiment of this application.
FIG. 9 is a schematic structural diagram of a terminal device according to an embodiment of this application.
FIG. 10 is a schematic structural diagram of a server according to an embodiment of this application.

### DESCRIPTION OF EMBODIMENTS

In order to enable a person skilled in the art to better under the solutions of this application, the following clearly and completely describes the technical solutions of the embodiments of this application with reference to the accompanying drawings in embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

The terms such as "first", "second", "third", and "fourth" (if any) in the specification and claims of this application and in the accompanying drawings are used for distinguishing between similar objects and not necessarily used for describing any particular order or sequence. The data used in such a way is interchangeable in proper circumstances, so that the embodiments of this application described herein can be implemented in other sequences than the sequence illustrated or described herein. In addition, the terms "include" and "have" and any other variants are intended to cover the non-exclusive inclusion. For example, a process, method, system, product, or device that includes a list of operations or units is not necessarily limited to those expressly listed operations or units, but may include other operations or units not expressly listed or inherent to such a process, method, product, or device.

The model rendering method provided in the embodiments of this application may be executed by a computer device. The computer device may be a terminal device or a server. The terminal device includes but is not limited to a mobile phone, a computer, an intelligent voice interaction device, a smart home appliance, an in-vehicle terminal, an aircraft, and the like. The server may be an independent physical server, or may be a server cluster or a distributed system including a plurality of physical servers, or may be a cloud server.

Information, data, and signals involved in the embodiments of this application are all authorized by a related user or are fully authorized by all parties, and collection, use, and processing of related data all comply with related laws and regulations and standards of related countries and regions.

For ease of understanding of a model rendering method provided in the embodiments of this application, an application scenario of the model rendering method is exemplarily introduced below by using an example in which an execution entity of the model rendering method is the server.

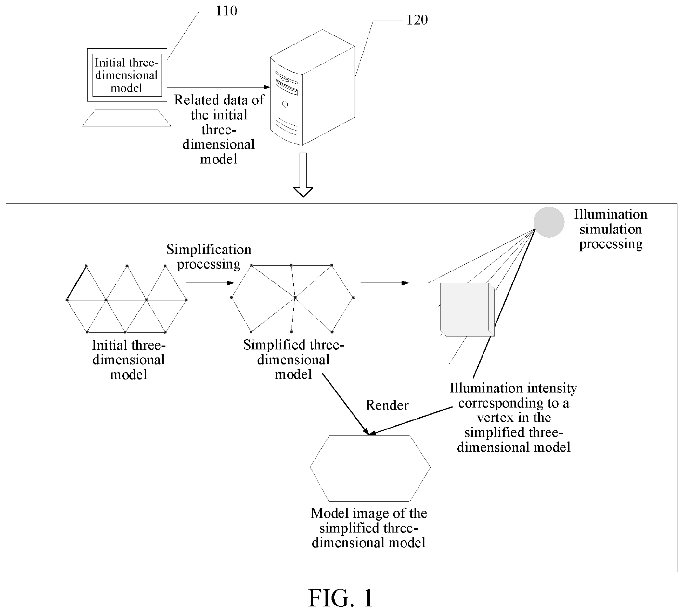

FIG. 1 is a schematic diagram of an application scenario of a model rendering method according to an embodiment of this application. As shown in FIG. 1, the application scenario includes a terminal device 110 and a server 120. The terminal device 110 may directly or indirectly communicate with the server 120 by using a wired network or a wireless network.

A target application program (such as a game application program, a social application program, or a debugging application program) supporting rendering and displaying a three-dimensional model is run in the terminal device 110. When the target application program run in the terminal device 110 fails in rendering a three-dimensional model, the terminal device 110 may use the three-dimensional model as an initial three-dimensional model, and send related data of the initial three-dimensional model to the server 120, so that the server 120 performs model enhancement rendering based on the initial three-dimensional model.

After obtaining the related data of the initial three-dimensional model, the server 120 may perform, based on a topological feature of the initial three-dimensional model, simplification processing on the initial three-dimensional model by reducing a model mesh quantity, to obtain a simplified three-dimensional model including a smaller mesh quantity than the initial three-dimensional model. Because model complexity of the simplified three-dimensional model is relatively lower, it is easier to successfully complete rendering when the simplified three-dimensional model is subsequently rendered, that is, a model rendering success rate can be improved. In addition, to ensure a rendering effect of the simplified three-dimensional model, a difference between the simplified three-dimensional model and the initial three-dimensional model needs to satisfy a preset similarity requirement, to ensure that appearance of the simplified three-dimensional model is similar to that of the initial three-dimensional model as much as possible, further ensure that a rendering effect of the simplified three-dimensional model is similar to that of the initial three-dimensional model, and avoid distortion caused by the simplification processing. The server 120 may determine, through illumination simulation processing when the simplified three-dimensional model is in a preset virtual environment, an illumination intensity corresponding to a vertex in the simplified three-dimensional model, that is, simulate an illumination effect when the simplified three-dimensional model is in the preset virtual environment. The illumination effect may help improve a rendering effect in a subsequent rendering process, so that a finally obtained rendering effect is more vivid.

Finally, the server 120 may perform rendering on the simplified three-dimensional model based on the simplified three-dimensional model and the illumination effect (namely, the illumination intensity corresponding to the vertex in the simplified three-dimensional model) that is obtained when the simplified three-dimensional model is in the preset virtual environment, to obtain a model image configured for representing the simplified three-dimensional model; and perform model rendering based on a processing result obtained through the foregoing simplification processing and illumination simulation processing, to ensure a relatively high rendering success rate, and ensure that a relatively good rendering effect is obtained. The rendering effect is similar to an expected rendering effect of the initial three-dimensional model. Therefore, in the foregoing method, model enhancement rendering can be automatically completed based on the original initial three-dimensional model, and model reconstruction and rendering do not need to be manually performed again based on a two-dimensional image, thereby improving reconstruction efficiency of the three-dimensional model and reducing labor costs.

The application scenario shown in FIG. 1 is only an example. During practical application, the model rendering method provided in this embodiment of this application may also be applied to another scenario. For example, the terminal device may independently perform the model rendering method. An application scenario of the model rendering method provided in this embodiment of this application is not limited herein.

The model rendering method provided in this application is described in detail below through method embodiments.

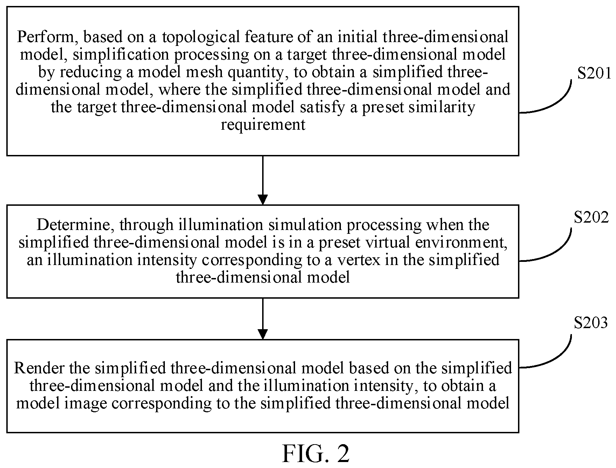

FIG. 2 is a schematic flowchart of a model rendering method according to an embodiment of this application. As shown in FIG. 2, the model rendering method includes the following operations.

S201: Perform, based on a topological feature of an initial three-dimensional model, simplification processing on the initial three-dimensional model by reducing a model mesh quantity, to obtain a simplified three-dimensional model, where the simplified three-dimensional model and the initial three-dimensional model satisfy a preset similarity requirement.

The initial three-dimensional model refers to an original processing object on which the model rendering method provided in this embodiment of this application is based, and may be a three-dimensional model in any form. The three-dimensional model refers to mathematical representation for geometrically modeling an object in three-dimensional space, and a basic structure of the three-dimensional model is formed by vertexes, sides, and surfaces.

For example, the initial three-dimensional model may be a three-dimensional model on which rendering fails. Rendering is a process of converting a form, a material, lighting, and other information of a three-dimensional model into a two-dimensional image, namely, a process of converting a three-dimensional virtual model into a two-dimensional image. The three-dimensional model on which rendering fails is a three-dimensional model whose rendering time is excessively long in a debugging process (for example, a three-dimensional model whose rendering time exceeds a preset duration threshold, and during practical application, the three-dimensional model affects user experience because the rendering time is excessively long), or a three-dimensional model whose rendering effect is different from an expected effect (for example, a three-dimensional model with problems such as a special effect is missing or a detail effect is missing). In an example, in a process of rendering the three-dimensional model, the three-dimensional model may be extracted and exported in real time by using a real-time rendering engine, for example, a debug toolbox of an unreal engine 4 (UE 4). In addition, a three-dimensional model whose rendering time is excessively long and rendering effect is abnormal may be further marked as a three-dimensional model on which rendering fails.

The topological feature of the initial three-dimensional model is also called a topology structure feature, which is a feature configured for reflecting a layout, a structure, and a connection condition between points, lines, and surfaces of the initial three-dimensional model, that is, the topological feature can reflect an appearance structure of the initial three-dimensional model. For example, the topological feature of the initial three-dimensional model may be determined according to vertexes and/or meshes included in the initial three-dimensional model. The mesh herein is a basic forming unit of the initial three-dimensional model, and may be specifically any type of polygon mesh (for example, a triangular mesh or a quadrangular mesh). More specifically, the topological feature of the initial three-dimensional model may be calculated according to vertex data and/or mesh data in the initial three-dimensional model through a topological feature calculation formula.

In an example, simplification processing is performed on a model structure of the initial three-dimensional model based on the topological feature of the initial three-dimensional model, that is, mesh preprocessing is performed on the initial three-dimensional model, to reduce a mesh quantity in the topological feature of the initial three-dimensional model, so as to obtain the simplified three-dimensional model. For example, a simplification processing method may include, but is not limited to, a vertex deletion method (deleting a vertex), an edge folding method (merging two vertexes of one side into one vertex, and recalculating vertexes of adjacent surfaces), a mesh folding method (folding a group of adjacent meshes into one vertex, and recalculating vertexes of adjacent meshes), and the like. Therefore, the simplification processing method is not specifically limited in this application.

The simplified three-dimensional model is a three-dimensional model obtained by performing simplification processing on the initial three-dimensional model, and a mesh quantity of the simplified three-dimensional model is less than a mesh quantity of the initial three-dimensional model. In addition, in the simplification processing process, to ensure that a rendering effect of the obtained simplified three-dimensional model can be close to a rendering effect of an original three-dimensional model, a case in which the simplified three-dimensional model and the initial three-dimensional model need to satisfy a preset similarity requirement further needs to be limited, that is, the simplified three-dimensional model and the initial three-dimensional model need to be as similar as possible in terms of a shape structure and the rendering effect, so that rendered images of the simplified three-dimensional model and the initial three-dimensional model may be as similar as possible. The preset similarity requirement is a preset difference requirement configured for measuring whether the simplified three-dimensional model and the initial three-dimensional model satisfy a rendering effect similarity condition (that is, a difference between the simplified three-dimensional model and the initial three-dimensional model needs to be as small as possible). For example, the preset similarity requirement may include a preset visual quality difference requirement (a difference requirement set from the perspective of a model visual effect, that is, it is ensured that the initial three-dimensional model and the simplified three-dimensional model are as similar as possible in terms of the visual effect) and a preset performance difference requirement (a difference requirement set from the perspective of model performance, that is, it is ensured that the initial three-dimensional model and the simplified three-dimensional model are as similar as possible in terms of the model performance). Correspondingly, a difference between the simplified three-dimensional model and the initial three-dimensional model may include a visual difference and a performance difference. Therefore, the preset similarity requirement and a measurement type of the difference between the simplified three-dimensional model and the initial three-dimensional model are not specifically limited in this application.

S202: Determine, through illumination simulation processing when the simplified three-dimensional model is in a preset virtual environment, an illumination intensity corresponding to a vertex in the simplified three-dimensional model.

The preset virtual environment is a virtual environment in which the simplified three-dimensional model needs to be in, for example, may be a virtual environment in which the initial three-dimensional model is originally in, or may be another virtual environment. The preset virtual environment is usually a three-dimensional virtual environment. For example, the preset virtual environment is a virtual game scenario in which the initial three-dimensional model is in, and the preset virtual environment is not specifically limited in this application.

With reference to an illumination effect when the initial three-dimensional model is in the preset virtual environment, illumination intensities corresponding to the vertexes in the simplified three-dimensional model may be determined in an illumination simulation processing method when the simplified three-dimensional model is in the preset virtual environment. For example, the illumination simulation processing method may be implemented by using a diffuse model Lambertian and another physical-based rendering model, to determine an illumination effect when the simplified three-dimensional model is in the preset virtual environment. Therefore, the illumination simulation processing method is not specifically limited in this application.

S203: Render the simplified three-dimensional model based on the simplified three-dimensional model and the illumination intensity corresponding to the vertex in the simplified three-dimensional model, to obtain a model image configured for representing the simplified three-dimensional model.

After the simplified three-dimensional model and the illumination intensities (namely, the illumination effect when the simplified three-dimensional model is in the preset virtual environment) corresponding to the vertexes in the simplified three-dimensional model are determined, rendering may be performed on the simplified three-dimensional model based on the simplified three-dimensional model and the illumination effect when the simplified three-dimensional model is in the preset virtual environment, to obtain the model image configured for representing the simplified three-dimensional model. The model image is specifically a two-dimensional image including the simplified three-dimensional model.

In an example, the simplified three-dimensional model and the illumination intensities corresponding to the vertexes in the simplified three-dimensional model may be input into a rendering tool for rendering, to obtain a two-dimensional model image corresponding to the simplified three-dimensional model. For example, the rendering tool may be rendering software VRay, Blender, or Omniverse RTX. Therefore, the rendering tool is not specifically limited in this application.

In addition, in this application, comparison between a rendering effect of the initial three-dimensional model on which rendering fails and a rendering effect of the simplified three-dimensional model may also be viewed, which is conducive to detecting in time and previewing the rendering effect of the simplified three-dimensional model.

In the model rendering method provided in this embodiment of this application, the method innovatively provides a solution of implementing model enhancement rendering based on an existing three-dimensional model. The method includes: first, for a to-be-processed initial three-dimensional model, performing, based on a topological feature of the initial three-dimensional model, simplification processing on the initial three-dimensional model by reducing a model mesh quantity, to obtain a simplified three-dimensional model including a smaller mesh quantity than the initial three-dimensional model. Because model complexity of the simplified three-dimensional model is relatively lower, it is easier to successfully complete rendering when the simplified three-dimensional model is subsequently rendered, that is, a model rendering success rate can be improved. In addition, to ensure a rendering effect of the simplified three-dimensional model, the simplified three-dimensional model and the initial three-dimensional model need to satisfy a preset similarity requirement, to ensure that appearance of the simplified three-dimensional model is similar to that of the initial three-dimensional model as much as possible, further ensure that a rendering effect of the simplified three-dimensional model is similar to that of the initial three-dimensional model, and avoid distortion caused by the simplification processing. Then, an illumination intensity corresponding to a vertex in the simplified three-dimensional model may be determined through illumination simulation processing when the simplified three-dimensional model is in a preset virtual environment, that is, an illumination effect is simulated when the simplified three-dimensional model is in the preset virtual environment. The illumination effect may help improve a rendering effect in a subsequent rendering process, so that a finally obtained rendering effect is more vivid. Finally, rendering is performed on the simplified three-dimensional model based on the simplified three-dimensional model and the illumination effect (namely, the illumination intensity corresponding to the vertex in the simplified three-dimensional model) that is obtained when the simplified three-dimensional model is in the preset virtual environment, to obtain a model image configured for representing the simplified three-dimensional model; and model rendering is performed based on a processing result obtained through the foregoing simplification processing and illumination simulation processing, to ensure a relatively high rendering success rate, and ensure that a relatively good rendering effect is obtained. The rendering effect is similar to an expected rendering effect of the initial three-dimensional model. Therefore, in the foregoing method, model enhancement rendering can be automatically completed based on the original initial three-dimensional model, and model reconstruction and rendering do not need to be manually performed again based on a two-dimensional image, thereby improving reconstruction efficiency of the three-dimensional model and reducing labor costs.

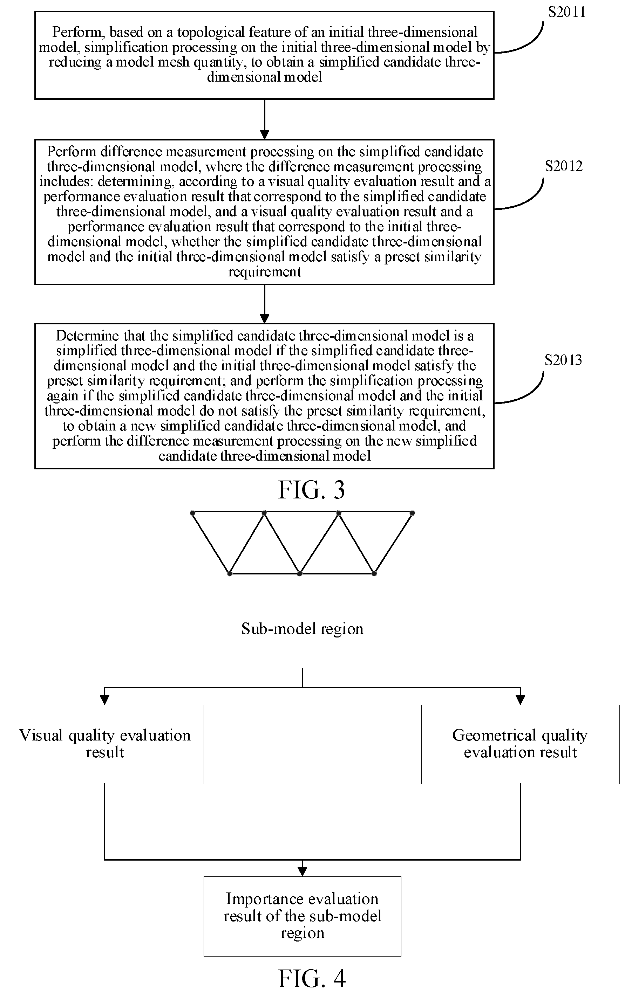

In a possible implementation, FIG. 3 is a schematic flowchart of a simplification processing process according to an embodiment of this application. The "performing simplification processing on a model structure of the initial three-dimensional model based on a topological feature of the initial three-dimensional model, to obtain a simplified three-dimensional model" in S201 may specifically include S2011 to S2013.

S2011: Perform, based on the topological feature of the initial three-dimensional model, the simplification processing on the initial three-dimensional model by reducing the model mesh quantity, to obtain a simplified candidate three-dimensional model.

In an example, the simplification processing may be performed on the initial three-dimensional model based on the topological feature of the initial three-dimensional model by reducing the model mesh quantity, to reduce the mesh quantity of the initial three-dimensional model, and the simplified candidate three-dimensional model may be obtained. The simplified candidate three-dimensional model is a three-dimensional model obtained by the simplification processing and used as a candidate. The simplified candidate three-dimensional model can be determined as the simplified three-dimensional model only when the simplified candidate three-dimensional model and the initial three-dimensional model satisfy the preset similarity requirement.

In an example, the initial three-dimensional model includes a plurality of sub-model regions, and the "performing, based on the topological feature of the initial three-dimensional model, the simplification processing on the initial three-dimensional model by reducing the model mesh quantity, to obtain a simplified candidate three-dimensional model" in S2011 may include:
determining, for each sub-model region, an importance evaluation result of the sub-model region based on a topological feature of the sub-model region, and determining, according to the importance evaluation result, a to-be-reduced mesh quantity corresponding to the sub-model region; and performing region simplification processing on the sub-model region according to the to-be-reduced mesh quantity, to obtain a simplified sub-model region corresponding to the sub-model region; and
determining the simplified candidate three-dimensional model according to simplified sub-model regions respectively corresponding to the plurality of sub-model regions.

The initial three-dimensional model may include the plurality of sub-model regions, and the plurality of sub-model regions may be divided according to the model structure of the initial three-dimensional model. For example, the initial three-dimensional model may be divided into a face sub-model region, a limb sub-model region, and a torso sub-model region. The plurality of sub-model regions are not specifically limited in this application.

In an example, a topological feature of each sub-model region may be calculated through a topological feature calculation formula. Then, importance of each sub-model region may be calculated based on the topological feature of each sub-model region through an evaluation function, to obtain the importance evaluation result of the sub-model region. The importance evaluation result of the sub-model region is configured for indicating an impact degree of a change of a mesh quantity in the sub-model region on a rendering effect of the sub-model region. If a relatively small change of the mesh quantity in the sub-model region causes a relatively large change of the rendering effect of the sub-model region, the importance evaluation result of the sub-model region correspondingly indicates a relatively high importance degree of the sub-model region. Otherwise, if a relatively large change of the mesh quantity in the sub-model region does not cause a relatively large change of the rendering effect of the sub-model region, the importance evaluation result of the sub-model region correspondingly indicates a relatively low importance degree of the sub-model region. For example, the importance evaluation result of each sub-model region may be represented in a manner of importance scoring.

In a possible implementation, the topological feature of the sub-model region may be determined in the following manner:
determining the topological feature of the sub-model region through a scale-invariant feature transform algorithm according to position data of vertexes in the sub-model region and map fragments associated with the vertexes.

A scale-invariant feature transform (SIFT) algorithm is a feature extraction algorithm widely applied to the field of computer vision, and can be configured for extracting a local structure feature of a model. An extreme point may be searched for in a space scale through the scale-invariant feature transform algorithm, and a position, a scale, and a rotation invariant of the extreme point are extracted. These feature points are invariant to changes such as a scale, rotation, and illumination of the model. Therefore, through the scale-invariant feature transform algorithm, referring to Formula 1, the topological feature of the sub-model region is determined according to position data of vertexes in the sub-model region and map fragments associated with the vertexes. The map fragments associated with the vertexes are sub-map data whose map data has a correspondence with the vertexes. $f = {\sum }_{i = 1}^{n} {w}_{i} ∗ SIFT \left({V}_{i}, {S}_{i}\right)$ Formula 1

f in Formula 1 represents a topological feature of a sub-model region, n represents a vertex quantity in the sub-model region, Vᵢ represents an i^{th} vertex in the sub-model region, Sᵢ represents a map fragment associated with the i^{th} vertex, and wᵢ represents a preset weight coefficient corresponding to the i^{th} vertex. A preset weight coefficient corresponding to a vertex may be determined according to an importance degree of the vertex. A higher importance degree of the vertex indicates a larger preset weight coefficient corresponding to the vertex. An importance degree of the vertex may be determined according to a degree of attention of the vertex in the sub-model region. That is, if a vertex is located at a relatively conspicuous position in the sub-model region and easily attracts attention, the importance degree of the vertex is higher.

In an example, a set of topological features of all sub-model regions in the initial three-dimensional model may be represented by using F(Z)={f₁, f₂, ..., f_{z}}, where f_{z} represents a topological feature of a Z^{th} sub-model region, and Z represents a quantity of sub-model regions in the initial three-dimensional model.

Therefore, the topological feature of the sub-model region can be extracted through the scale-invariant feature transform algorithm. Because the scale-invariant feature transform algorithm has features such as scale-invariance, rotation-invariance, and illumination-invariance, the topological feature of the sub-model region can be accurately extracted based on position data of vertexes in the sub-model region and map fragments associated with the vertexes, which is conducive to accurately evaluating importance of the sub-model region based on this, and performing corresponding simplification processing on the sub-model region.

In a possible implementation, the "determining an importance evaluation result of the sub-model region based on a topological feature of the sub-model region" may include:
determining a visual quality evaluation result and a geometrical quality evaluation result of the sub-model region based on the topological feature of the sub-model region, where the visual quality evaluation result is configured for representing an impact degree of a change of a mesh quantity in the sub-model region on a map effect corresponding to the sub-model region, and the geometrical quality evaluation result is configured for representing an impact degree of a change of a mesh quantity in the sub-model region on a region shape of the sub-model region; and
determining the importance evaluation result of the sub-model region according to the visual quality evaluation result and the geometrical quality evaluation result.

When the importance evaluation result of the sub-model region is determined, overall importance of the sub-model region may be determined from two perspectives: visual importance and geometrical importance.

The visual quality evaluation result of the sub-model region is configured for indicating the visual importance of the sub-model region, that is, configured for representing the impact degree of the change of the mesh quantity in the sub-model region on the map effect corresponding to the sub-model region. If a relatively small change of the mesh quantity in the sub-model region causes a relatively large change of the map effect corresponding to the sub-model region, the visual quality evaluation result of the sub-model region correspondingly indicates a relatively high visual importance degree of the sub-model region. Otherwise, if a relatively large change of the mesh quantity in the sub-model region does not cause a relatively large change of the map effect corresponding to the sub-model region, the visual quality evaluation result of the sub-model region correspondingly indicates a relatively low visual importance degree of the sub-model region.

In an example, the visual importance of the sub-model region may be calculated by dividing an area of each mesh in the sub-model region by an area of a map corresponding to the sub-model region, to obtain the visual quality evaluation result V(fᵢ) of the sub-model region, where fᵢ represents a topological feature of the sub-model region i. Therefore, an implementation method for evaluating the visual importance of the sub-model region is not specifically limited in this application.

The geometrical quality evaluation result of the sub-model region is configured for indicating the geometrical importance of the sub-model region, that is, configured for representing the impact degree of the change of the mesh quantity in the sub-model region on a region shape of the sub-model region. If a relatively small change of the mesh quantity in the sub-model region causes a relatively large change of the region shape of the sub-model region, the geometrical quality evaluation result of the sub-model region correspondingly indicates a relatively high geometrical importance degree of the sub-model region. Otherwise, if a relatively large change of the mesh quantity in the sub-model region does not cause a relatively large change of the region shape of the sub-model region, the geometrical quality evaluation result of the sub-model region correspondingly indicates a relatively low geometrical importance degree of the sub-model region.

In an example, the geometrical importance of the sub-model region may be determined by comparing whether the mesh quantity in the sub-model region falls within a preset region mesh quantity range, to obtain the geometrical quality evaluation result G(fᵢ) of the sub-model region, where fᵢ represents a topological feature of the sub-model region i. The preset region mesh quantity range is configured for indicating the geometrical importance of the sub-model region. For example, when the mesh quantity in the sub-model region falls within the preset region mesh quantity range, it is considered that the geometrical quality evaluation result of the sub-model region is excellent (corresponding to a relatively high score); and when the mesh quantity in the sub-model region does not fall within the preset region mesh quantity range, it is considered that the geometrical quality evaluation result of the sub-model region is poor (corresponding to a relatively low score). Therefore, the implementation method for evaluating the geometrical importance of the sub-model region is not specifically limited in this application.

FIG. 4 is a schematic diagram of determining an importance evaluation result of a sub-model region according to an embodiment of this application. After a visual quality evaluation result and a geometrical quality evaluation result of a sub-model region are determined, an importance evaluation result of the sub-model region may be determined according to the visual quality evaluation result and the geometrical quality evaluation result that correspond to the sub-model region. Refer to Formula 2. $I \left({f}_{i}\right) = {w}_{v} * V \left({f}_{i}\right) + {w}_{g} G \left({f}_{i}\right)$ Formula 2

I(fᵢ) in Formula 2 represents an importance evaluation result of the sub-model region, V(fᵢ) represents a visual quality evaluation result of the sub-model region, wᵥ represents a preset weight coefficient of visual importance, G(fᵢ) represents a geometrical quality evaluation result of the sub-model region, and w_{g} represents a preset weight coefficient of geometrical importance.

Therefore, the visual quality evaluation result and the geometrical quality evaluation result of the sub-model region may be determined based on a topological feature of the sub-model region. Finally, the importance evaluation result of the sub-model region may be determined according to the visual quality evaluation result and the geometrical quality evaluation result of the sub-model region. It can be learned that, the importance evaluation result of the sub-model region can be accurately and comprehensively determined from two perspectives: the visual importance and the geometrical importance in the foregoing method.

After an importance evaluation result of each sub-model region is determined, a to-be-reduced mesh quantity corresponding to each sub-model region in a simplification processing process may be further determined based on the importance evaluation result of each sub-model region through a correspondence (the correspondence may be preset according to historical experience) between the importance evaluation result and the to-be-reduced mesh quantity. The to-be-reduced mesh quantity refers to a mesh quantity that needs to be reduced in the sub-model region in the simplification processing process. A higher importance evaluation result of the sub-model region indicates a larger impact degree of a change of a mesh quantity in the sub-model on a rendering effect of the sub-model region, and a smaller to-be-reduced mesh quantity corresponding to the sub-model region. On the contrary, a lower importance evaluation result of the sub-model region indicates a smaller impact degree of a change of a mesh quantity in the sub-model on a rendering effect of the sub-model region, and a larger to-be-reduced mesh quantity corresponding to the sub-model region.

After the to-be-reduced mesh quantity corresponding to the sub-model region is determined, region simplification processing may be performed on the sub-model region according to the to-be-reduced mesh quantity corresponding to the sub-model region, to obtain a simplified sub-model region corresponding to the sub-model region. The simplified sub-model region refers to a simplification result obtained by performing simplification processing on the sub-model region. In a process of performing region simplification processing on the sub-model region according to the to-be-reduced mesh quantity corresponding to the sub-model region, a vertex or a mesh may be randomly selected from the topological feature of the sub-model region for corresponding deletion, or region simplification processing may be performed on the sub-model region according to a specific vertex deletion mechanism or edge folding mechanism.

A formula of the mesh quantity included in the simplified sub-model region may be shown in Formula 3. ${T}_{new} = {T}_{old} - δ \left(I\left({f}_{i}\right)\right)$ Formula 3

T_{new} in Formula 3 represents the mesh quantity in the simplified sub-model region obtained after performing simplification processing, T_{old} represents a mesh quantity in the sub-model region obtained before performing simplification processing, and δ(I(fᵢ)) represents a to-be-reduced mesh quantity determined based on the importance evaluation result of the sub-model region.

Finally, simplified sub-model regions respectively corresponding to a plurality of sub-model regions are combined, to determine an overall simplified candidate three-dimensional model, and further, difference measurement processing may be performed based on the overall simplified candidate three-dimensional model, to determine a simplified three-dimensional model finally satisfying a preset similarity requirement.

Therefore, for the plurality of sub-model regions in the initial three-dimensional model, importance evaluation results of the sub-model regions may be determined based on topological features of the sub-model regions. Then, the to-be-reduced mesh quantity corresponding to the sub-model region may be determined according to the importance evaluation result of each sub-model region. That is, the higher importance evaluation result of the sub-model region indicates the smaller to-be-reduced mesh quantity corresponding to the sub-model region. Then, region simplification processing is performed on the sub-model region according to the to-be-reduced mesh quantity, to obtain a simplification result corresponding to the sub-model region, namely, the simplified sub-model region. Finally, simplified sub-model regions respectively corresponding to the plurality of sub-model regions are combined, to determine an entire simplified candidate three-dimensional model. It can be learnt that, the simplification processing may be performed on the initial three-dimensional model in the foregoing method based on regions, thereby simplifying model complexity of the initial three-dimensional model, and implementing the simplification processing on the initial three-dimensional model in detail. In addition, the simplification processing is performed on each sub-model region with reference to the importance evaluation result of each sub-model region, to properly simplify each sub-model region, which is conducive to improving an effect of a finally obtained simplified candidate three-dimensional model, is conducive to rapidly obtaining a simplified three-dimensional model satisfying the preset similarity requirement, reducing calculation load in a rendering process, and improving rendering efficiency of the simplified three-dimensional model.

In addition, in this embodiment of this application, to improve processing efficiency of the simplification processing process, the simplification processing process may be further optimized. For example, the simplification processing on each sub-model region is performed in parallel, that is, the simplification processing is simultaneously performed on the plurality of sub-model regions in the initial three-dimensional model through a plurality of processing threads. Referring to Formula 4, in the foregoing parallel processing manner, processing time for performing the simplification processing process can be effectively reduced. $O \left({T}_{new}\right) = O \left({T}_{old}\right) / j * log \left(z\right)$ Formula 4

O(T_{new}) in Formula 4 represents processing time for a simplification processing process after optimization, O(T_{old}) represents processing time for a simplification processing process before optimization, j represents a quantity of processing threads configured for performing the simplification processing in parallel, and z represents a quantity of sub-model regions in the initial three-dimensional model.

S2012: Perform difference measurement processing on the simplified candidate three-dimensional model, where the difference measurement processing includes: determining, according to a visual quality evaluation result and a performance evaluation result that correspond to the simplified candidate three-dimensional model, and a visual quality evaluation result and a performance evaluation result that correspond to the initial three-dimensional model, whether the simplified candidate three-dimensional model and the initial three-dimensional model satisfy the preset similarity requirement.

To ensure that a rendering effect of the model is not affected by the simplification processing process, so that a rendering effect of the simplified three-dimensional model is close to a rendering effect of the original three-dimensional model as much as possible, difference measurement processing may be performed on the simplified candidate three-dimensional model, to determine whether the simplified candidate three-dimensional model and the initial three-dimensional model satisfy the preset similarity requirement. If the simplified candidate three-dimensional model and the initial three-dimensional model satisfy the preset similarity requirement, the simplified candidate three-dimensional model is used as a simplified three-dimensional model on which final rendering is based.

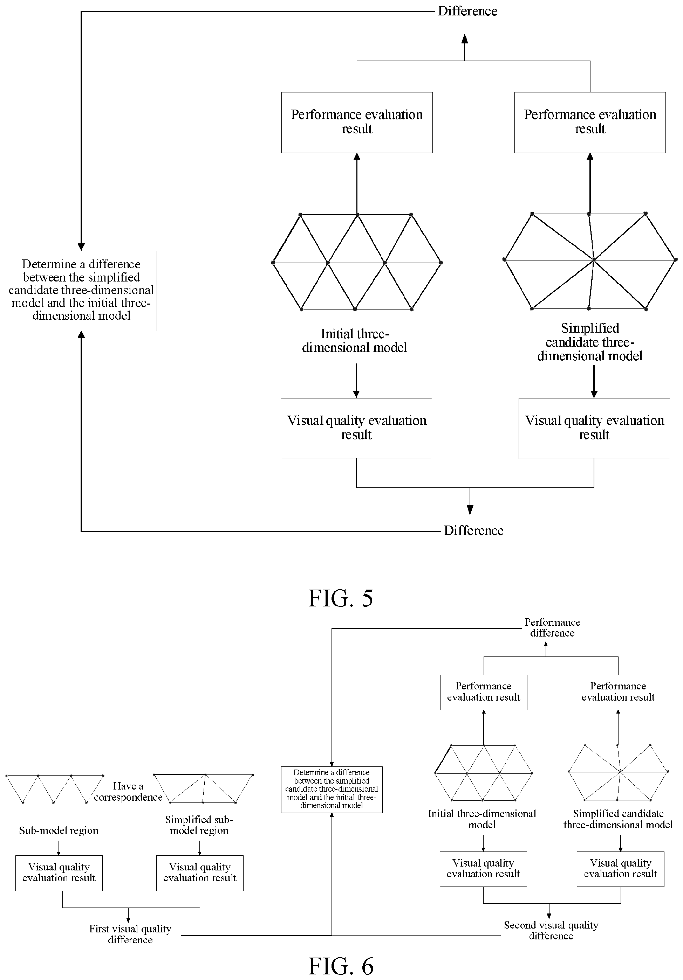

FIG. 5 is a schematic structural diagram of a difference measurement processing process according to an embodiment of this application. The performing difference measurement processing on a simplified candidate three-dimensional model may include: determining, according to a difference between a visual quality evaluation result corresponding to the simplified candidate three-dimensional model and a visual quality evaluation result corresponding to an initial three-dimensional model and a difference between a performance evaluation result corresponding to the simplified candidate three-dimensional model and a performance evaluation result corresponding to the initial three-dimensional model, whether the simplified candidate three-dimensional model and the initial three-dimensional model satisfy a preset similarity requirement.

In an example, visual quality (a similarity degree between model contours) of the simplified candidate three-dimensional model and the initial three-dimensional model may be separately calculated in a visual quality evaluation method (such as a visual quality evaluation function), to obtain a visual quality evaluation result corresponding to the simplified candidate three-dimensional model and a visual quality evaluation result corresponding to the initial three-dimensional model. The visual quality evaluation result corresponding to the simplified candidate three-dimensional model is configured for indicating visual quality of the simplified candidate three-dimensional model, that is, configured for representing an impact degree of a change (compared with a mesh quantity in the initial three-dimensional model) of a mesh quantity in the simplified candidate three-dimensional model on a visual effect corresponding to the simplified candidate three-dimensional model.

In this embodiment of this application, based on the visual quality, a difference between model contours of the simplified candidate three-dimensional model and the initial three-dimensional model may be evaluated when the simplified candidate three-dimensional model and the initial three-dimensional model are displayed. Generally, a larger difference between model mesh quantities included in two three-dimensional models indicates a larger difference between model contours of the two three-dimensional models. Alternatively, a larger difference between model mesh quantities of two three-dimensional models in a same region indicates a larger difference between model contours of the region. For example, when the initial three-dimensional model is a human-shaped model, for a head region, if a difference between model mesh quantities of the simplified candidate three-dimensional model and the initial three-dimensional model on the head is excessively large relative to another part (for example, the torso and the limbs) in a simplification process, a difference between a contour of the head of the simplified candidate three-dimensional model and a contour of the head of the initial three-dimensional model is excessively large, and it is difficult to pass visual quality evaluation.

For example, the visual quality evaluation result corresponding to the simplified candidate three-dimensional model may be represented in a manner of visual quality scoring. Correspondingly, the visual quality evaluation result corresponding to the initial three-dimensional model is configured for indicating the visual quality of the initial three-dimensional model, that is, configured for representing an impact degree of a change of a mesh quantity in the initial three-dimensional model on a visual effect corresponding to the initial three-dimensional model. For example, the visual quality evaluation result corresponding to the initial three-dimensional model may be represented in a manner of visual quality scoring. Therefore, an expression form of the visual quality evaluation result is not specifically limited in this application. In a manner of visual quality scoring, model simplification (a model mesh quantity is reduced for the initial three-dimensional model) may be performed based on reducing an impact of a model contour to the greatest extent, so that a difference between model meshes of the initial three-dimensional model and the simplified candidate three-dimensional model in regions is relatively uniform and is not very large, to avoid an excessively large difference between a model contour of the simplified three-dimensional model (for example, the simplified three-dimensional model) and a model contour of the initial three-dimensional model.

Correspondingly, performance of the simplified candidate three-dimensional model and performance of the initial three-dimensional model may be respectively calculated in a performance evaluation method (such as a model precision calculation method), to obtain a performance evaluation result corresponding to the simplified candidate three-dimensional model and a performance evaluation result corresponding to the initial three-dimensional model. The performance evaluation result corresponding to the simplified candidate three-dimensional model is configured for indicating performance of the simplified candidate three-dimensional model. The performance of the simplified candidate three-dimensional model may be specifically determined by the mesh quantity included in the simplified candidate three-dimensional model. Generally, the larger mesh quantity included in the simplified candidate three-dimensional model indicates better performance of the simplified candidate three-dimensional model. For example, the performance evaluation result of the simplified candidate three-dimensional model may be represented through a model precision calculation result. Correspondingly, the performance evaluation result corresponding to the initial three-dimensional model is configured for indicating performance of the initial three-dimensional model. The performance of the initial three-dimensional model may also be specifically determined by the mesh quantity included in the initial three-dimensional model. For example, the performance evaluation result of the initial three-dimensional model may be represented through a model precision calculation result. Therefore, an expression form of the performance evaluation result is not specifically limited in this application.

Performance of a three-dimensional model may be understood as modeling fineness of the three-dimensional model. Generally, a larger model mesh quantity included in a three-dimensional model indicates a smoother surface and higher contour fineness of the three-dimensional model. A smaller model mesh quantity included in a three-dimensional model indicates a more defined surface and lower contour fineness of the three-dimensional model. It can be learnt that, a performance evaluation result corresponding to a three-dimensional model having a large model mesh quantity may be better than that corresponding to a three-dimensional model having a low model mesh quantity.

In an example, the preset similarity requirement may include a preset visual quality difference requirement and a preset performance difference requirement. In this case, the visual quality evaluation result corresponding to the simplified candidate three-dimensional model and the visual quality evaluation result corresponding to the initial three-dimensional model may be compared with the preset visual quality difference requirement, to determine whether a visual quality difference between the simplified candidate three-dimensional model and the initial three-dimensional model satisfies the preset visual quality difference requirement. Correspondingly, the performance evaluation result corresponding to the simplified candidate three-dimensional model and the performance evaluation result corresponding to the initial three-dimensional model may be further compared with the preset performance requirement, to determine whether a performance difference between the simplified candidate three-dimensional model and the initial three-dimensional model satisfies the preset performance difference requirement.

In a possible implementation, the "determining, according to a visual quality evaluation result and a performance evaluation result that correspond to the simplified candidate three-dimensional model, and a visual quality evaluation result and a performance evaluation result that correspond to the initial three-dimensional model, whether the simplified candidate three-dimensional model and the initial three-dimensional model satisfy the preset similarity requirement" in S2012 may include:
determining a first visual quality difference between the simplified candidate three-dimensional model and the initial three-dimensional model according to a region visual quality difference corresponding to each region pair; and the region pair includes the simplified sub-model region and the sub-model region that have a correspondence, and the region visual quality difference is determined according to respective visual quality evaluation results of the simplified sub-model region and the sub-model region;
determining a second visual quality difference according to respective visual quality evaluation results of the simplified candidate three-dimensional model and the initial three-dimensional model;
determining a performance difference according to respective performance evaluation results of the simplified candidate three-dimensional model and the initial three-dimensional model; and
determining, according to the first visual quality difference, the second visual quality difference, and the performance difference, whether the simplified candidate three-dimensional model and the initial three-dimensional model satisfy the preset similarity requirement.

The region pair includes a simplified sub-model region and a sub-model region that have a correspondence, that is, the region pair includes a sub-model region obtained before performing the simplification processing and a corresponding simplified sub-model region obtained after performing the simplification processing.

The region visual quality difference is determined based on a difference between the visual quality evaluation result of the sub-model region and the visual quality evaluation result of the corresponding simplified sub-model region, and is configured for indicating a visual quality difference of the sub-model region obtained before and after performing the simplification processing. For example, the region visual quality difference may be represented in a manner of visual quality scoring. A calculation method of the visual quality evaluation result of the simplified sub-model region may be the same as a calculation manner of the visual quality evaluation result of the sub-model region.

FIG. 6 is a schematic structural diagram of another difference measurement processing process according to an embodiment of this application. After a region visual quality difference corresponding to each region pair to which each sub-model region belongs is calculated, a first visual quality difference between a simplified candidate three-dimensional model and an initial three-dimensional model may be further determined according to the region visual quality difference corresponding to each region pair. The first visual quality difference is configured for reflecting a difference between the simplified candidate three-dimensional model and the initial three-dimensional model from the perspective of local visual quality.

For example, referring to Formula 5, the first visual quality difference between the simplified candidate three-dimensional model and the initial three-dimensional model is determined based on the region visual quality difference corresponding to each region pair. $Q \left({M}_{new}, {M}_{old}\right) = 1 - 1 / m {\sum }_{i - 1}^{m} \left|V\left({f}_{i , new}\right)-V\left({f}_{i , old}\right)\right|$ Formula 5

Q(M_{new}, M_{old}) in Formula 5 represents the first visual quality difference between the simplified candidate three-dimensional model and the initial three-dimensional model, m represents a quantity of region pairs, namely, a quantity of sub-model regions in the simplified candidate three-dimensional model, V(f_{i, new}) represents a visual quality evaluation result of an i^{th} simplified sub-model region, and V(f_{i, old}) represents a visual quality evaluation result of an i^{th} sub-model region, where the i^{th} simplified sub-model region and the i^{th} sub-model region have a correspondence, and both belong to an i^{th} region pair.

In addition, a second visual quality difference between the simplified candidate three-dimensional model and the initial three-dimensional model may be further determined according to a visual quality evaluation result of the simplified candidate three-dimensional model and a visual quality evaluation result of the initial three-dimensional model. The second visual quality difference is configured for reflecting a difference between the simplified candidate three-dimensional model and the initial three-dimensional model from the perspective of an overall visual quality difference. For example, referring to Formula 6, a difference between the visual quality evaluation result of the simplified candidate three-dimensional model and the visual quality evaluation result of the initial three-dimensional model is used as the second visual quality difference. $V \left({M}_{new}\right) \geq V \left({M}_{old}\right) - ∈$ Formula 6

V(M_{new}) in Formula 6 represents the visual quality evaluation result of the simplified candidate three-dimensional model, V(M_{old}) represents the visual quality evaluation result of the initial three-dimensional model, and ∈ represents an acceptable visual quality evaluation error range. In an example, a visual quality evaluation result V(M_{new}) corresponding to the simplified three-dimensional model may be determined by using a visual quality evaluation function according to each mesh included in the simplified candidate three-dimensional model. Correspondingly, a calculation manner of the visual quality evaluation result of the initial three-dimensional model may be the same as a calculation manner of the visual quality evaluation result of the simplified candidate three-dimensional model.

In addition, a performance difference between the simplified candidate three-dimensional model and the initial three-dimensional model may be further determined according to a performance evaluation result of the simplified candidate three-dimensional model and a performance evaluation result of the initial three-dimensional model. For example, referring to Formula 7, a difference between the performance evaluation result of the simplified candidate three-dimensional model and the performance evaluation result of the initial three-dimensional model is used as the performance difference. $P \left({M}_{new}\right) \leq P \left({M}_{old}\right) + \partial$ Formula 7

P(M_{new}) in Formula 7 represents the performance evaluation result of the simplified candidate three-dimensional model, P(M_{old}) represents the performance evaluation result of the initial three-dimensional model, and ∂ represents an acceptable performance evaluation error range.In an example, a performance evaluation result P(M_{new}) corresponding to the simplified three-dimensional model may be determined by using a performance quality evaluation function according to a vertex quantity included in the simplified candidate three-dimensional model. Correspondingly, a calculation manner of the performance evaluation result of the initial three-dimensional model may be the same as a calculation manner of the performance evaluation result of the simplified candidate three-dimensional model.

Finally, when the first visual quality difference, the second visual quality difference, and the performance difference are determined, whether the simplified candidate three-dimensional model and the initial three-dimensional model satisfy the preset similarity requirement may be determined based on the foregoing differences.

For example, if the first visual quality difference satisfies a preset local visual quality difference requirement, for example, the first visual quality difference obtained through calculation through Formula 5 is within a preset first difference threshold, the second visual quality difference satisfies a requirement of Formula 6, and the performance difference satisfies a requirement of Formula 7, it may be considered that the simplified candidate three-dimensional model and the initial three-dimensional model satisfy the preset similarity requirement. The preset local visual quality difference requirement is configured for measuring, from the perspective of local vision, whether a rendering effect of the simplified candidate three-dimensional model is close to a rendering effect of the initial three-dimensional model.

On the contrary, if any one of the first visual quality difference, the second visual quality difference, and the performance difference does not satisfy a corresponding difference requirement, it is considered that the simplified candidate three-dimensional model and the initial three-dimensional model do not satisfy the preset similarity requirement, and a new simplified candidate three-dimensional model needs to be re-determined.

Therefore, in the foregoing method, the simplified candidate three-dimensional model can be carefully determined and compared in all aspects from a dimension of local visual quality, a dimension of overall visual quality, and a dimension of performance, to ensure that a rendering effect of the finally determined simplified three-dimensional model can be close to a rendering effect of the original three-dimensional model as much as possible.

S2013: Determine the simplified candidate three-dimensional model as the simplified three-dimensional model if the simplified candidate three-dimensional model and the initial three-dimensional model satisfy the preset similarity requirement, and perform the simplification processing again if the simplified candidate three-dimensional model and the initial three-dimensional model do not satisfy the preset similarity requirement, to obtain a new simplified candidate three-dimensional model, and perform the difference measurement processing on the new simplified candidate three-dimensional model.

In an example, if a visual quality difference (which may include the first visual quality difference and the second visual quality difference) between the simplified candidate three-dimensional model and the initial three-dimensional model satisfies a preset visual quality difference requirement, and a performance difference between the simplified candidate three-dimensional model and the initial three-dimensional model satisfies a preset performance difference requirement, it is considered that the simplified candidate three-dimensional model and the initial three-dimensional model satisfy the preset similarity requirement, and the simplified candidate three-dimensional model may be determined as the simplified three-dimensional model.

If either of the visual quality difference and the performance difference between the simplified candidate three-dimensional model and the initial three-dimensional model does not satisfy a corresponding difference requirement, it is considered that the simplified candidate three-dimensional model and the initial three-dimensional model do not satisfy the preset similarity requirement. In this case, S2011 and S2012 may be performed again, that is, the simplification processing is performed on a model structure of the initial three-dimensional model again based on a topological feature of the initial three-dimensional model, to obtain a new simplified candidate three-dimensional model, so that difference measurement processing may be performed on the new simplified candidate three-dimensional model until a simplified candidate three-dimensional model satisfying the preset similarity requirement is determined as the simplified three-dimensional model.

Therefore, first, the simplification processing may be performed on the model structure of the initial three-dimensional model based on the topological feature of the initial three-dimensional model, to obtain the simplified candidate three-dimensional model, and then difference measurement processing may be performed on the simplified candidate three-dimensional model, that is, difference measurement processing may be performed from two aspects, namely, a visual aspect and a performance aspect, to determine whether the simplified candidate three-dimensional model and the initial three-dimensional model satisfy the preset similarity requirement. If the simplified candidate three-dimensional model and the initial three-dimensional model satisfy the preset similarity requirement, the simplified candidate three-dimensional model may be determined as the simplified three-dimensional model. If the simplified candidate three-dimensional model and the initial three-dimensional model do not satisfy the preset similarity requirement, the simplification processing operation may be performed again, to determine a new simplified candidate three-dimensional model, and difference measurement processing continues to be performed on the new simplified candidate three-dimensional model, until the simplified candidate three-dimensional model satisfying the preset similarity requirement is determined as the simplified three-dimensional model. It can be learnt that, in the foregoing method, a difference between the simplified candidate three-dimensional model and the initial three-dimensional model may be measured from two aspects, namely, the visual aspect and the performance aspect, to ensure that the rendering effect of the finally determined simplified three-dimensional model is close to that of the initial three-dimensional model in the visual aspect and the performance aspect.

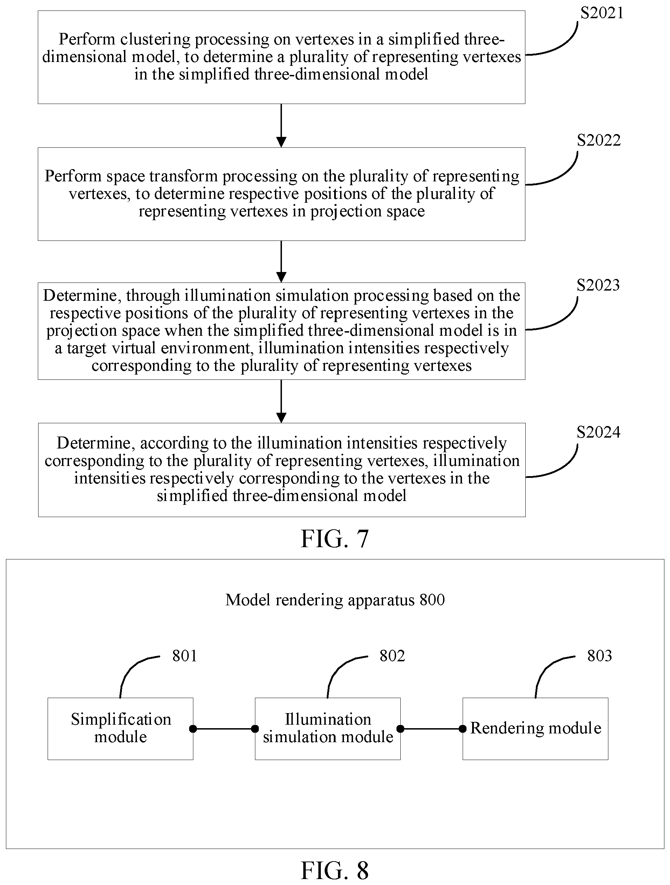

In a possible implementation, FIG. 7 is a schematic flowchart of an illumination simulation processing process according to an embodiment of this application. The "determining, through illumination simulation processing when the simplified three-dimensional model is in a preset virtual environment, an illumination intensity corresponding to a vertex in the simplified three-dimensional model" in S202 may specifically include S2021 to S2024.

S2021: Perform clustering processing on the vertexes in the simplified three-dimensional model, to determine a plurality of representing vertexes in the simplified three-dimensional model.

The clustering processing is a process of clustering and merging adjacent similar classification regions by using a morphology operator. A similarity degree or a distance between data points may be calculated through a clustering algorithm, data points with a high similarity degree are classified into a same cluster, and data points with a low similarity degree are classified into different clusters. For example, the clustering algorithm may include a K-means clustering algorithm, a hierarchical clustering algorithm, a spectrum clustering algorithm, and the like. The clustering algorithm is not specifically limited in this application.

In an example, referring to Formula 8, clustering processing is performed on vertexes in the simplified three-dimensional model based on the K-means algorithm, so that a plurality of representing vertexes in the simplified three-dimensional model may be determined. The representing vertexes refer to a representing result in a cluster obtained after clustering processing is performed on the vertexes in the simplified three-dimensional model. ${V}_{processed} = Kmean \left({V}_{original}\right)$ Formula 8

V_{processed} in Formula 8 represents the plurality of representing vertexes in the simplified three-dimensional model obtained by clustering processing, V_{original} represents the vertexes in the simplified three-dimensional model, and the Kmean algorithm refers to an improved K-means algorithm, and is configured for optimizing vertex data in the simplified three-dimensional model, to reduce redundancy and improve processing efficiency of illumination simulation processing.

Optionally, one vertex (for example, a vertex at a cluster center) may be selected from vertexes in a cluster as a representing vertex. In this implementation, the cluster and the representing vertex are in one-to-one correspondence. Alternatively, a plurality of representing vertexes may be selected from one cluster. This is not limited in this application.

S2022: Perform space transform processing on the plurality of representing vertexes, to determine respective positions of the plurality of representing vertexes in projection space.

The space transform processing refers to mapping a point in a three-dimensional model from one space to another space. After the plurality of representing vertexes in the simplified three-dimensional model are determined, space transform processing may be performed on the plurality of representing vertexes, to transform the plurality of representing vertexes from model space to the projection space, that is, determine respective positions of the plurality of representing vertexes in the projection space. The model space refers to space in which the simplified three-dimensional model is originally in, and the projection space refers to space that can reflect an illumination effect of the simplified three-dimensional model.

In a possible implementation, the "performing space transform processing on the plurality of representing vertexes, to determine respective positions of the plurality of representing vertexes in projection space" in S2022 may include:
obtaining, through transform based on respective positions of the plurality of representing vertexes in model space, respective positions of the plurality of representing vertexes in world space;
obtaining, through transform based on respective positions of the plurality of representing vertexes in the world space, respective positions of the plurality of representing vertexes in view space; and
obtaining, through transform based on respective positions of the plurality of representing vertexes in the view space, respective positions of the plurality of representing vertexes in the projection space.

The model space refers to coordinate space associated with the three-dimensional model. The world space refers to a three-dimensional region occupied by material existence and motion, and a position of an object in the world space is defined based on a global coordinate system. The view space is space defined from the perspective of a camera or an observer. The projection space is space that can reflect an illumination effect of the three-dimensional model.

In an example, referring to Formula 9, respective positions of the plurality of representing vertexes in the world space may be obtained through transform based on the respective positions of the plurality of representing vertexes in the model space multiplying a transform matrix in the world space. ${V}_{world} = {M}_{world} * {V}_{model}$ Formula 9

V_{world} in Formula 9 represents the respective positions of the plurality of representing vertexes in the world space, M_{world} represents a transform matrix from the model space to the world space, and V_{model} represents the respective positions of the plurality of representing vertexes in the model space. The transform matrix in the world space is configured for indicating changes of positions, directions, and scales of the representing vertexes in the world space. The transform matrix may be considered as a set of a series of space transforms (for example, operations such as zooming, rotation, and translation).

After the respective positions of the plurality of representing vertexes in the world space are determined, referring to Formula 10, the respective positions of the plurality of representing vertexes in the view space may be obtained through transform based on the respective positions of the plurality of representing vertexes in the world space multiplying a transform matrix in the view space. ${V}_{view} = {M}_{view} * {V}_{world}$ Formula 10

V_{view} in Formula 10 represents the respective positions of the plurality of representing vertexes in the view space, and M_{view} represents the transform matrix from the world space to the view space. The transform matrix in the view space is configured for indicating changes of positions, directions, and scales of the representing vertexes in the view space.

After the respective positions of the plurality of representing vertexes in the view space are determined, referring to Formula 11, the respective positions of the plurality of representing vertexes in the projection space may be obtained through transform based on the respective positions of the plurality of representing vertexes in the view space multiplying a transform matrix in the projection space. ${V}_{proj} = {M}_{proj} * {V}_{view}$ Formula 11

Vₚᵣₒⱼ in Formula 11 represents the respective positions of the plurality of representing vertexes in the projection space, and Mₚᵣₒⱼ represents the transform matrix from the view space to the projection space. The transform matrix in the projection space is configured for indicating changes of positions, directions, and scales of the representing vertexes in the projection space.

Therefore, through the foregoing formula, space transform processing may be performed on the plurality of representing vertexes, to sequentially transform positions of the plurality of representing vertexes in the model space into the world space, the view space, and the projection space, so that the respective positions of the plurality of representing vertexes in the simplified three-dimensional model in the projection space may be accurately determined, thereby facilitating subsequent rendering and display.

S2023: Determine, through the illumination simulation processing based on the respective positions of the plurality of representing vertexes in the projection space when the simplified three-dimensional model is in the preset virtual environment, illumination intensities respectively corresponding to the plurality of representing vertexes.

The illumination simulation processing is a processing method for simulating, based on knowledge of optics and physics, processes such as transmission, reflection, and refracting of light in space, to determine an illumination effect of a processing target. After the respective positions of the plurality of representing vertexes in the projection space are determined, in the illumination simulation processing method, the illumination intensities respectively corresponding to the plurality of representing vertexes in the simplified three-dimensional model may be determined based on the respective positions of the plurality of representing vertexes in the projection space when the simplified three-dimensional model is in the preset virtual environment.

In a possible implementation, the "determining, through the illumination simulation processing based on the respective positions of the plurality of representing vertexes in the projection space when the simplified three-dimensional model is in the preset virtual environment, illumination intensities respectively corresponding to the plurality of representing vertexes " may include:
determining, for each representing vertex according to a position of the representing vertex in the projection space, a normal direction, a reflection vector, and a line-of-sight direction that correspond to the representing vertex; and determining an illumination intensity corresponding to the representing vertex according to a simulated light intensity, a diffuse light intensity, a reflected light intensity, a light source direction, and a highlight index that correspond to the preset virtual environment, the normal direction, the reflection vector, and the line-of-sight direction.

The normal direction refers to a direction perpendicular to a vector of a surface on which the position of the representing vertex is located, and is configured for describing an orientation of the surface on which the position of the representing vertex is located. For example, normal vectors of all surfaces sharing the representing vertex may be first obtained, then these normal vectors may be added and normalized, a normal vector of the representing vertex may be determined, and further a normal direction may be determined based on the normal vector of the representing vertex. The reflection vector refers to a vector of light obtained after the light is reflected on a surface on which the position of the representing vertex is located. For example, a reflection vector corresponding to the representing vertex may be obtained through calculation through a reflection vector calculation formula based on an incident light vector and a plane normal vector of the surface on which the position of the representing vertex is located. The line-of-sight direction refers to a direction from a viewing angle of an observer to a vector of a representing vertex in a scenario. For example, the direction from the viewing angle of the observer to the vector of the representing vertex in the scenario may be determined based on a difference between a position of the representing vertex and a position of the observer, so that the line-of-sight direction may be further determined based on the direction of the vector.

Therefore, in the foregoing method, for each representing vertex, a normal direction, a reflection vector, and a line-of-sight direction that correspond to the representing vertex may be determined according to the position of the representing vertex in the projection space. Then, referring to Formula 12, the illumination intensity corresponding to the representing vertex is determined according to the simulated light intensity, the diffuse light intensity, the reflected light intensity, the light source direction, and the highlight index that correspond to the preset virtual environment, the normal direction, the reflection vector, and the line-of-sight direction. $T = {I}_{a} * {k}_{a} + {\sum }_{lights} \left({I}_{d}∗\left(L∗N\right)∗{k}_{d}+{I}_{s}∗\left(R∗V\right)a∗{k}_{s}\right)$ Formula 12

T in Formula 12 represents the illumination intensity corresponding to the representing vertex, Iₐ represents the simulated light intensity corresponding to the preset virtual environment, kₐ represents a material coefficient when the simulated light intensity is determined in the preset virtual environment, I_{d} represents the diffuse light intensity corresponding to the preset virtual environment, k_{d} represents a material coefficient when the diffuse light intensity is determined in the preset virtual environment, L represents the light source direction corresponding to the preset virtual environment, N represents the normal direction corresponding to the representing vertex, Iₛ represents the reflected light intensity corresponding to the preset virtual environment, kₛ represents a material coefficient when the reflected light intensity in the preset virtual environment is determined, R represents the reflection vector corresponding to the representing vertex, V represents the line-of-sight direction corresponding to the representing vertex, and a represents the highlight index corresponding to the preset virtual environment.

The simulated light intensity refers to a light intensity that is generated in the preset virtual environment through a simulation means. For example, the light intensity in the preset virtual environment may be simulated through a simulation tool, to obtain the simulated light intensity. The diffuse light intensity refers to an intensity of light reflected in various directions after the light is projected on a rough surface in the preset virtual environment. For example, the diffuse light intensity may be obtained through calculation through simulation software based on information such as a surface material of a reflective object and a light source parameter and according to a law that the diffuse light intensity is directly proportional to a cosine of an angle between a surface normal and a light source direction, to obtain the diffuse light intensity. The reflected light intensity refers to an intensity of light reflected by light from an object surface in the preset virtual environment, and may be, for example, calculated according to Fresnel's law (a law of reflection and refracting of light on an interface of two media), to obtain the reflected light intensity. The light source direction refers to a direction in which light is emitted from a light source. For example, the light source direction may be set in simulation software, to determine the light source direction in the preset virtual environment. The highlight index is a parameter configured for measuring a specular reflection capability of the object surface in the preset virtual environment, and may reflect an intensity and a range of a highlight effect generated when the object surface in the preset virtual environment is irradiated by the light source. For example, the highlight index may be determined by adjusting a material parameter in simulation software.

Therefore, for a position of each representing vertex in the projection space, the normal direction, the reflection vector, and the line-of-sight direction that correspond to the representing vertex may be determined. Further, referring to the foregoing formula, the illumination intensity corresponding to the representing vertex may be obtained through calculation based on the normal direction, the reflection vector, and the line-of-sight direction that correspond to the representing vertex, and the simulated light intensity, the diffuse light intensity, the reflected light intensity, the light source direction, and the highlight index that correspond to the preset virtual environment. It can be learnt that, in the illumination simulation processing process, not only an illumination environment in the preset virtual environment is considered, but also an impact of the representing vertex on the illumination environment is considered. Therefore, in the illumination simulation processing method, an illumination effect of the simplified three-dimensional model in the preset virtual environment may be accurately determined, and the illumination effect may help improve a rendering effect in a subsequent rendering process, so that a finally obtained rendering effect is more vivid.

S2024: Determine, according to the illumination intensities respectively corresponding to the plurality of representing vertexes, illumination intensities respectively corresponding to the vertexes in the simplified three-dimensional model.

In an example, when the illumination intensities respectively corresponding to the plurality of representing vertexes are determined, it may be considered that the illumination intensities of the vertexes are the same as an illumination intensity of a representing vertex belonging to a same cluster. Alternatively, the illumination intensities of the vertexes may be properly adjusted according to a distance between the representing vertex and the vertexes belonging to a same cluster and a distance between the vertexes and the light source. For example, if a distance between the representing vertex and a vertex A belonging to a same cluster is within a first distance threshold range, and the vertex A is closer to the light source than the representing vertex, an illumination intensity corresponding to the representing vertex may be properly enhanced, to use an enhanced illumination intensity as an illumination intensity of the vertex A. If a distance between the representing vertex and a vertex B belonging to a same cluster is within a second distance threshold range (greater than the first distance threshold range), and the vertex B is farther from the light source than the representing vertex, an illumination intensity corresponding to the representing vertex may be properly reduced, to use the reduced illumination intensity as an illumination intensity of the vertex B. Therefore, the illumination intensities respectively corresponding to the vertexes in the simplified three-dimensional model may be determined according to the illumination intensities respectively corresponding to the plurality of representing vertexes.

Therefore, clustering processing is first performed on the vertexes in the simplified three-dimensional model, to determine the plurality of representing vertexes in the simplified three-dimensional model, and then space transform processing is performed on the plurality of representing vertexes, to determine respective display positions of the plurality of representing vertexes in the projection space. Then, through illumination simulation processing, the illumination intensities respectively corresponding to the plurality of representing vertexes may be determined when the simplified three-dimensional model is in the preset virtual environment. Finally, the illumination intensities respectively corresponding to the vertexes in the simplified three-dimensional model may be determined according to the illumination intensities respectively corresponding to the plurality of representing vertexes. It can be learned that, in the illumination simulation processing process, processing is performed by using the representing vertex obtained by clustering processing as an execution unit, to improve processing efficiency in the illumination simulation processing process and reduce a calculation amount in the illumination simulation processing process. In addition, the illumination intensities respectively corresponding to the vertexes in the simplified three-dimensional model may be accurately determined according to the illumination intensities respectively corresponding to the plurality of representing vertexes, to accurately determine an illumination effect when the simplified three-dimensional model is in the preset virtual environment, thereby improving rendering performance.

In a possible implementation, in the process of performing S203, the method provided in this embodiment of this application may further include:
performing rendering enhancement processing in a process of rendering the simplified three-dimensional model, where the rendering enhancement processing includes at least one of the following: high-frequency detail enhancement processing, light tracing processing, ambient light occlusion processing, and dynamic blur processing on a motion region in the simplified three-dimensional model.

The rendering enhancement processing refers to a processing method of improving, through a series of technical means, quality of a two-dimensional image obtained through rendering in a rendering process of the simplified three-dimensional model, so that a two-dimensional image is clearer, more vivid, and conforms to a specific visual effect requirement. For example, the rendering enhancement processing may include any one or more of high-frequency detail enhancement processing, light tracing processing, ambient light occlusion processing, and dynamic blur processing on a motion region in the simplified three-dimensional model.

The high-frequency detail enhancement processing is an algorithm configured for enhancing a rendering effect of high-frequency details in an image, and is configured for improving definition and an information amount of an image by extracting and enhancing high-frequency details in the image. The high-frequency details in the image may be details, an edge, texture information, and the like in the image. The high-frequency details in the simplified three-dimensional model may be determined according to attention degrees of different regions in the simplified three-dimensional model. That is, a region in the simplified three-dimensional model is at a relatively conspicuous position and easily attracts attention. It may be considered that the region is the high-frequency detail in the simplified three-dimensional model, and high-frequency detail enhancement processing may be particularly performed on the region in a rendering process.

In an example, the high-frequency detail enhancement processing may be implemented in the following manner:
extracting, based on a Gaussian blur function, a target vertex belonging to a high-frequency detail region from the vertexes included in the simplified three-dimensional model; and
performing, based on the target vertex, image enhancement processing on a map associated with the simplified three-dimensional model.

The Gaussian blur function is configured for reducing noise and a level of detail in an image, to simulate an effect that an object seen by human eyes becomes blur when a distance increases. The Gaussian blur function is implemented by performing weighted averaging on a pixel and pixels around the pixel in the image. The target vertex is configured for indicating the vertex belonging to the high-frequency detail region in the simplified three-dimensional model. For example, referring to Formula 13, the target vertex belonging to the high-frequency detail region is extracted from the vertexes of the simplified three-dimensional model based on the Gaussian blur function. ${D}_{hf} = α * \left(V-G\left(V, σ\right)\right)$ Formula 13

D_{hf} in Formula 13 represents the vertex corresponding to the high-frequency detail region in the simplified three-dimensional model, namely, the target vertex, G(V, σ) represents a Gaussian blur function applied to each vertex in the simplified three-dimensional model, and σ represents a standard deviation of the Gaussian kernel, and is configured for controlling a blur degree in the Gaussian blur function.α represents a coefficient for controlling enhancement strength when the target vertex is extracted.

After the target vertex is determined, referring to Formula 14, image enhancement processing is performed based on the target vertex configured for representing the high-frequency detail region in the simplified three-dimensional model and the map associated with the simplified three-dimensional model. ${I}_{enhanced} = I + λ * {D}_{hf}$ Formula 14

I_{enhanced} in Formula 14 represents a map obtained after the image enhancement processing is performed based on the high-frequency detail region in the simplified three-dimensional model, I represents the map associated with the simplified three-dimensional model, and λ represents a coefficient of enhancement strength for controlling the image enhancement processing.The image enhancement processing is a processing method for improving quality of a map image corresponding to the high-frequency detail region in the simplified three-dimensional model, to achieve a better visual effect.

Therefore, the target vertex configured for representing the high-frequency detail region in the simplified three-dimensional model may be determined through the foregoing formula, and then image enhancement processing is performed based on the target vertex and the map associated with the simplified three-dimensional model, to obtain a map on which the image enhancement processing is performed based on the high-frequency detail region in the simplified three-dimensional model. It can be learnt that, the high-frequency detail region in the simplified three-dimensional model may be enhanced by performing rendering enhancement on the simplified three-dimensional model in the high-frequency detail enhancement processing method, to improve definition of a two-dimensional image including the simplified three-dimensional model.

The light tracing processing is a method for truly displaying an object, and is mainly configured for simulating propagation and reflection of light in a scenario by tracing light interacting with an optical surface, to vividly simulate the propagation and the reflection of the light in the scenario, so as to generate the high-quality two-dimensional image including the simplified three-dimensional model.

In an example, the light tracing processing may be implemented in the following manner:
determining, for pixels in a to-be-generated model image, reflected light corresponding to the pixels; and determining, through a light following function according to the reflected light corresponding to the pixels and a light intensity of the reflected light, color values corresponding to the pixels.

The to-be-generated model image is the two-dimensional image including the simplified three-dimensional model that is obtained by performing rendering on the simplified three-dimensional model. For example, referring to Formula 15, for each pixel in the two-dimensional image, reflected light corresponding to the pixels is determined. ${r}_{i} = R \left({o}_{i}, {d}_{i}\right)$ Formula 15

rᵢ in Formula 15 represents reflected light corresponding to a pixel in the to-be-generated model image, and R(oᵢ, dᵢ) is a function configured for calculating reflected light of a pixel, where oᵢ represents a position of an observer, namely, an observation point, and dᵢ represents a direction of the reflected light from a direction of the observation point.

After reflected light corresponding to the pixels is determined, referring to Formula 16, color values corresponding to the pixels are determined through a light tracing function and according to the reflected light corresponding to the pixels and a light intensity of the reflected light. ${C}_{ray} = {\sum }_{i = 1}^{x} {r}_{i} L \left({r}_{i}, {o}_{i}\right) ∗ T$ Formula 16

C_{ray} in Formula 16 represents a color value corresponding to a pixel, x represents an amount of reflected light related to the pixel, L represents a light tracing function, and T represents a light intensity of the reflected light corresponding to the pixel. The light tracing function is configured for simulating a process in which light starts from a light source, passes through an object in a scenario, and finally reaches eyes of an observer, to generate a highly vivid image.

Therefore, the reflected light corresponding to the pixels in the two-dimensional image including the simplified three-dimensional model may be determined through the foregoing formula, and then the color values corresponding to the pixels may be determined through the light tracing function and according to the reflected light corresponding to the pixels and the light intensity of the reflected light. It can be learnt that, rendering enhancement is performed on the simplified three-dimensional model in the light tracing processing method, so that a propagation and reflection process of light in the preset virtual environment can be vividly simulated, to ensure that the color values of the pixels can be close to a rendering effect of the original three-dimensional model, thereby improving a sense of reality of the two-dimensional image including the simplified three-dimensional model.

The ambient light occlusion processing is a technology configured for improving a shadow effect generated when objects in an image are mutually occluded, and enhancing details and a sense of layering of an image by simulating an occlusion condition of ambient light on a surface and a gap of an object. In other words, when the objects are close to each other or intersect with each other, surrounding light may be blocked, leading to a shadow and a dark part. The ambient light occlusion technology enhances dark part details and a sense of layering of an image by calculating an impact of the blocked light on the surface of the object.

In an example, the ambient light occlusion processing may be implemented in the following manner:
determining, for the pixels in the to-be-generated model image according to a visible relationship between the pixels and the vertexes in the simplified three-dimensional model, ambient light occlusion values corresponding to the pixels.

The ambient light occlusion value is configured for indicating an intensity value of indirect illumination received by the pixels in the to-be-generated model image due to occlusion of a surrounding environment.

For example, referring to Formula 17, the ambient light occlusion values corresponding to the pixels is determined according to the visible relationship between the pixels and the vertexes in the simplified three-dimensional model. ${A}_{0} \left(p\right) = 1 - 1 / X {\sum }_{i = 1}^{X} V \left(p, {p}_{i}\right)$ Formula 17

A₀(p) in Formula 17 represents an ambient light occlusion value corresponding to a pixel p, X represents a quantity of vertexes in the simplified three-dimensional model, and V(p, pᵢ) is a visibility function configured for representing a visible relationship between the pixel and the vertexes in the simplified three-dimensional model. For example, when V(p, pᵢ)=1, it indicates that an i^{th} vertex pᵢ in the simplified three-dimensional model is visible to the pixel p, that is, the i^{th} vertex pᵢ can be seen from the pixel p; and when V(p, pᵢ)=0, it indicates that an i^{th} vertex pᵢ in the simplified three-dimensional model is invisible to the pixel p, that is, the i^{th} vertex pᵢ cannot be seen from the pixel p.

Therefore, through the foregoing formula, the ambient light occlusion values corresponding to the pixels may be determined according to the visible relationship between the pixels and the vertexes in the simplified three-dimensional model. It can be learnt that, rendering enhancement is performed on the simplified three-dimensional model in the ambient light occlusion processing method, so that an impact of occlusion light on the pixel in the two-dimensional image can be calculated, thereby enhancing a depth feeling and detail richness of the two-dimensional image including the simplified three-dimensional model.

Dynamic blur processing on the motion region in the simplified three-dimensional model is a technology configured for enhancing a sense of reality of a motion scenario. When the simplified three-dimensional model or a camera moves quickly, to simulate a blur effect generated when a camera shutter speed is relatively slow in actual photographing, dynamic blur processing is performed on the motion region, to enhance a sense of reality of the two-dimensional image including the simplified three-dimensional model. The motion region in the simplified three-dimensional model is identified and determined according to an algorithm. For example, if a key feature of the motion region, such as a joint point and a rotation axis, is identified through an identification algorithm, it is considered that a region in which the key feature is located belongs to the motion region in the simplified three-dimensional model. Therefore, the motion region in the simplified three-dimensional model is not specifically limited in this application.

In an example, the motion blur processing on the motion region in the simplified three-dimensional model may be implemented in the following manner:
determining, for each pixel corresponding to the motion region in the to-be-generated model image according to a model motion speed at each dynamic sampling moment and a time interval between every two adjacent dynamic sampling moments, a dynamic blur value corresponding to the pixel.

The dynamic sampling moment is a sampling moment at which a vertex in the motion region moves. The dynamic blur value corresponding to the pixel is a result value of a dynamic blur effect implemented when the camera or the simplified three-dimensional model moves in a rendering process.

For example, referring to Formula 18, the dynamic blur value corresponding to the pixel may be determined according to the model motion speed at each dynamic sampling moment and the time interval between every two adjacent dynamic sampling moments. ${B}_{motion} \left(p\right) = 1 / Y {\sum }_{i = 1}^{Y} I \left(p+{s}_{i}∗Δt\right)$ Formula 18

Bₘₒₜᵢₒₙ(p) in Formula 18 represents the dynamic blur value of the pixel p corresponding to the motion region in the to-be-generated model image, Y represents a total quantity of dynamic sampling moments, I represents an image function, and is configured for determining the dynamic blur effect of the pixel in the motion region, sᵢ represents a model motion speed at an i^{th} dynamic sampling moment, and Δt represents the time interval between the two adjacent dynamic sampling moments.

Therefore, through the foregoing formula, the dynamic blur value corresponding to the pixel may be determined according to the model motion speed at the dynamic sampling moment and the time interval between every two adjacent dynamic sampling moments. It can be learnt that, rendering enhancement is performed on the motion region in the simplified three-dimensional model in the dynamic blur processing method for the motion region in the simplified three-dimensional model, to enhance a visual effect of the motion region, so that the two-dimensional image that includes the simplified three-dimensional model and that is obtained through rendering is more dynamic and vivid.

One or more of the foregoing rendering enhancement processing methods may be applied to a rendering process. Therefore, a quantity and a type of the rendering enhancement processing method used in a process of rendering the simplified three-dimensional model are not specifically limited in this application.

Therefore, in the process of rendering the simplified three-dimensional model, rendering enhancement processing is performed on the simplified three-dimensional model in the foregoing rendering enhancement processing method, so that a rendering effect of the simplified three-dimensional model can be comprehensively enhanced from different dimensions, rendering quality of the simplified three-dimensional model is improved, and simulated illumination and a sense of reality of the map are increased, to obtain a two-dimensional image that is more vivid and closer to the rendering effect of the original three-dimensional model.

Based on the model rendering method provided in the foregoing embodiment, this application further correspondingly provides a model rendering apparatus. Descriptions are provided below with reference to FIG. 8. FIG. 8 is a schematic structural diagram of a model rendering apparatus 800 according to an embodiment of this application. The apparatus includes:
a simplification module 801, configured to perform, based on a topological feature of an initial three-dimensional model, simplification processing on the initial three-dimensional model by reducing a model mesh quantity, to obtain a simplified three-dimensional model, the simplified three-dimensional model and the initial three-dimensional model satisfying a preset similarity requirement;
an illumination simulation module 802, configured to determine, through illumination simulation processing when the simplified three-dimensional model is in a preset virtual environment, an illumination intensity corresponding to a vertex in the simplified three-dimensional model; and
a rendering module 803, configured to render, based on the simplified three-dimensional model and the illumination intensity corresponding to the vertex in the simplified three-dimensional model, the simplified three-dimensional model, to obtain a model image corresponding to the simplified three-dimensional model.

Optionally, the simplification module 801 includes:
a simplification processing unit, configured to perform, based on the topological feature of the initial three-dimensional model, the simplification processing on the initial three-dimensional model by reducing the model mesh quantity, to obtain a simplified candidate three-dimensional model;
a difference measurement processing unit, configured to perform difference measurement processing on the simplified candidate three-dimensional model, the difference measurement processing including: determining, according to a visual quality evaluation result and a performance evaluation result that correspond to the simplified candidate three-dimensional model, and a visual quality evaluation result and a performance evaluation result that correspond to the initial three-dimensional model, whether the simplified candidate three-dimensional model and the initial three-dimensional model satisfy the preset similarity requirement; and
a first determining unit, configured to determine the simplified candidate three-dimensional model as the simplified three-dimensional model if the simplified candidate three-dimensional model and the initial three-dimensional model satisfy the preset similarity requirement, and perform the simplification processing again if the simplified candidate three-dimensional model and the initial three-dimensional model do not satisfy the preset similarity requirement, to obtain a new simplified candidate three-dimensional model, and perform the difference measurement processing on the new simplified candidate three-dimensional model.

Optionally, the initial three-dimensional model includes a plurality of sub-model regions. The simplification module 801 includes:
a second determining unit, configured to determine, for each sub-model region, an importance evaluation result of the sub-model region based on a topological feature of the sub-model region, and determine, according to the importance evaluation result, a to-be-reduced mesh quantity corresponding to the sub-model region; and perform region simplification processing on the sub-model region according to the to-be-reduced mesh quantity, to obtain a simplified sub-model region corresponding to the sub-model region; and
a third determining unit, configured to determine the simplified candidate three-dimensional model according to simplified sub-model regions respectively corresponding to the plurality of sub-model regions.

Optionally, the apparatus further includes the following unit configured to determine the topological feature of the sub-model region:
a fourth determining unit, configured to determine the topological feature of the sub-model region through a scale-invariant feature transform algorithm according to position data of vertexes in the sub-model region and map fragments associated with the vertexes.

Optionally, the second determining unit includes:
a fifth determining unit, configured to determine a visual quality evaluation result and a geometrical quality evaluation result of the sub-model region based on the topological feature of the sub-model region, where the visual quality evaluation result is configured for representing an impact degree of a change of a mesh quantity in the sub-model region on a map effect corresponding to the sub-model region, and the geometrical quality evaluation result is configured for representing an impact degree of a change of a mesh quantity in the sub-model region on a region shape of the sub-model region; and
a sixth determining unit, configured to determine the importance evaluation result of the sub-model region according to the visual quality evaluation result and the geometrical quality evaluation result.

Optionally, the difference measurement processing unit includes:
a seventh determining unit, configured to determine a first visual quality difference between the simplified candidate three-dimensional model and the initial three-dimensional model according to a region visual quality difference corresponding to each region pair; and the region pair includes the simplified sub-model region and the sub-model region that have a correspondence, and the region visual quality difference is determined according to respective visual quality evaluation results of the simplified sub-model region and the sub-model region;
a seventh determining unit, configured to determine a second visual quality difference according to respective visual quality evaluation results of the simplified candidate three-dimensional model and the initial three-dimensional model;
an eighth determining unit, configured to determine a performance difference according to respective performance evaluation results of the simplified candidate three-dimensional model and the initial three-dimensional model; and
a ninth determining unit, configured to determine, according to the first visual quality difference, the second visual quality difference, and the performance difference, whether the simplified candidate three-dimensional model and the initial three-dimensional model satisfy the preset similarity requirement.

Optionally, the illumination simulation module 802 includes:
a clustering processing unit, configured to perform clustering processing on the vertexes in the simplified three-dimensional model, to determine a plurality of representing vertexes in the simplified three-dimensional model;
a space transform processing unit, configured to perform space transform processing on the plurality of representing vertexes, to determine respective positions of the plurality of representing vertexes in projection space;
a tenth determining unit, configured to determine, through the illumination simulation processing based on the respective positions of the plurality of representing vertexes in the projection space when the simplified three-dimensional model is in the preset virtual environment, illumination intensities respectively corresponding to the plurality of representing vertexes; and
an illumination intensity determining unit, configured to determine, according to the illumination intensities respectively corresponding to the plurality of representing vertexes, illumination intensities respectively corresponding to the vertexes in the simplified three-dimensional model.

Optionally, the space transform processing unit includes:
a first transform unit, configured to obtain, through transform based on respective positions of the plurality of representing vertexes in model space, respective positions of the plurality of representing vertexes in world space;
a second transform unit, configured to obtain, through transform based on respective positions of the plurality of representing vertexes in the world space, respective positions of the plurality of representing vertexes in view space; and
a third transform unit, configured to obtain, through transform based on respective positions of the plurality of representing vertexes in the view space, respective positions of the plurality of representing vertexes in the projection space.

Optionally, the tenth determining unit includes:
an eleventh determining unit, configured to determine, for each representing vertex according to a position of the representing vertex in the projection space, a normal direction, a reflection vector, and a line-of-sight direction that correspond to the representing vertex; and determine an illumination intensity corresponding to the representing vertex according to a simulated light intensity, a diffuse light intensity, a reflected light intensity, a light source direction, and a highlight index that correspond to the preset virtual environment, the normal direction, the reflection vector, and the line-of-sight direction.

In some embodiments, the apparatus further includes:
a rendering enhancement processing unit, configured to perform rendering enhancement processing in a process of rendering the simplified three-dimensional model, where the rendering enhancement processing includes at least one of the following: high-frequency detail enhancement processing, light tracing processing, ambient light occlusion processing, and dynamic blur processing on a motion region in the simplified three-dimensional model.

Optionally, the apparatus further includes the following units configured to implement the high-frequency detail enhancement processing:
an extraction unit, configured to extract, based on a Gaussian blur function, a target vertex belonging to a high-frequency detail region from the vertexes comprised in the simplified three-dimensional model; and
an image enhancement processing unit, configured to perform, based on the target vertex, image enhancement processing on a map associated with the simplified three-dimensional model.

Optionally, the apparatus further includes the following unit configured to implement the light tracing processing:
a color value determining unit, configured to determine, for pixels in a to-be-generated model image, reflected light corresponding to the pixels; and determine, through a light tracing function according to the reflected light corresponding to the pixels and a light intensity of the reflected light, a color value corresponding to the pixels.

Optionally, the apparatus further includes the following unit configured to implement the ambient light occlusion processing:
an ambient light occlusion value determining unit, configured to determine, for the pixels in the to-be-generated model image according to a visible relationship between the pixels and the vertexes in the simplified three-dimensional model, ambient light occlusion values corresponding to the pixels.

Optionally, the apparatus further includes the following unit configured to implement the dynamic blur processing:
a dynamic blur value determining unit, configured to determine, for each pixel corresponding to the motion region in the to-be-generated model image according to a model motion speed at each dynamic sampling moment and a time interval between every two adjacent dynamic sampling moments, a dynamic blur value corresponding to the pixel.

Embodiments of this application further provide a computer device. The computer device may be specifically a terminal device or a server. The following describes the terminal device and the server provided in the embodiments of this application from the perspective of hardware materialization.

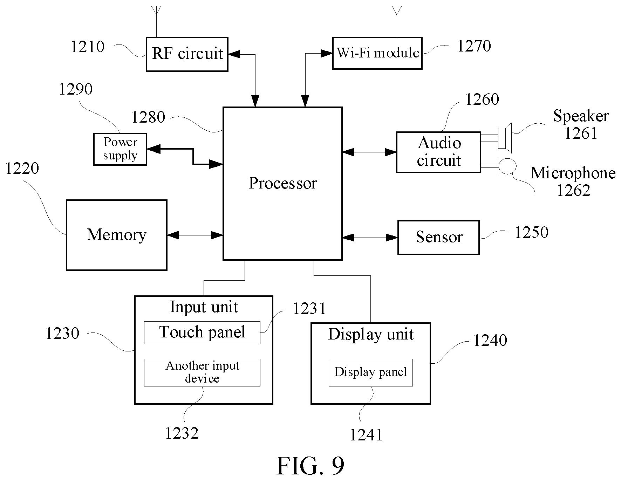

FIG. 9 is a schematic structural diagram of a terminal device according to an embodiment of this application. As shown in FIG. 9, for ease of description, only parts related to this embodiment of this application are shown. For specific technical details not disclosed, refer to the method part of the embodiments of this application. The terminal may be any terminal device such as a mobile phone, a tablet computer, a personal digital assistant (PDA), a point of sales (POS), or an in-vehicle computer. An example in which the terminal is a computer is used.

FIG. 9 is a block diagram of a part of a structure of a computer related to the terminal provided in this embodiment of this application. Referring to FIG. 9, the computer includes: components such as: a radio frequency (RF) circuit 1210, a memory 1220, an input unit 1230 (including a touch panel 1231 and another input device 1232), a display unit 1240 (including a display panel 1241), a sensor 1250, an audio circuit 1260 (connected to a speaker 1261 and a microphone 1262), a wireless fidelity (Wi-Fi) module 1270, a processor 1280, and a power supply 1290. A person skilled in the art may understand that the structure of the computer shown in FIG. 9 does not constitute a limitation on the computer, which may include more or fewer components than those shown in the figure, or some merged components, or different component arrangements.

The memory 1220 may be configured to store a software program and a module. The processor 1280 runs the software program and the module stored in the memory 1220, to implement various functional applications and data processing of the computer. The memory 1220 may mainly include a program storage area and a data storage area. The program storage area may store an operating system, an application program required by at least one function (such as a sound playback function and an image display function), and the like. The data storage area may store data (such as audio data and an address book) created according to the use of the computer, and the like. In addition, the memory 1220 may include a high-speed random access memory, and may also include a non-volatile memory, for example, at least one magnetic disk storage device, a flash memory, or another volatile solid-state storage device.

The processor 1280 is a control center of the computer, is connected to all parts of the entire computer by using various interfaces and lines, and executes various functions of the computer and performs data processing by running or executing the software program and/or the module stored in the memory 1220 and invoking data stored in the memory 1220. Optionally, the processor 1280 may include one or more processing units. Preferably, the processor 1280 may integrate an application processor and a modem. The application processor mainly processes an operating system, a user interface, an application program, and the like. The modem mainly processes wireless communication. The foregoing modem may either not be integrated into the processor 1280.

In this embodiment of this application, the processor 1280 included in the terminal is configured to perform the operations in the model rendering method described in the foregoing embodiments.

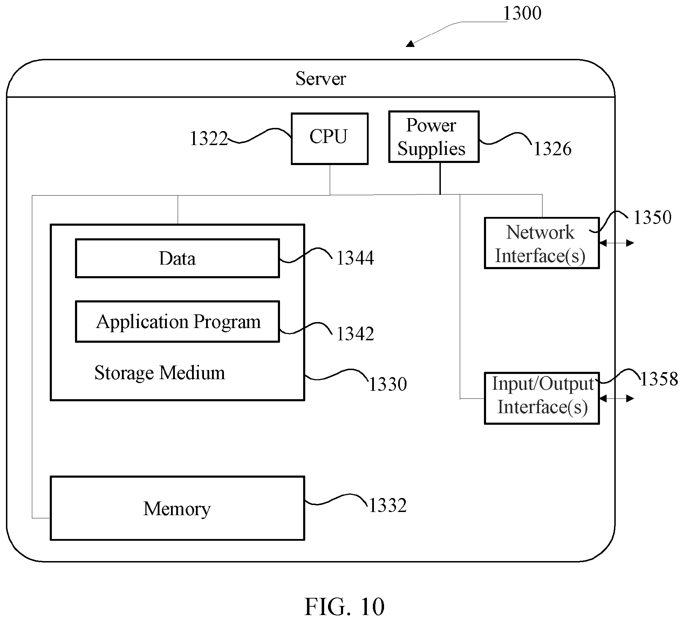

FIG. 10 is a schematic structural diagram of a server 1300 according to an embodiment of this application. The server 1300 may vary greatly because of different configurations or performance, and may include one or more central processing units (CPUs) 1322 (for example, one or more processors), a memory 1332, and one or more storage media 1330 (for example, one or more mass storage devices) that store an application program 1342 or data 1344. The memory 1332 and the storage medium 1330 may be transient or persistent storages. A program stored in the storage medium 1330 may include one or more modules (not shown in the figure), and each module may include a series of instruction operations on the server. Further, the central processing unit 1322 may be configured to communicate with the storage medium 1330, and execute, on the server 1300, the series of instruction operations in the storage medium 1330.

The server 1300 may further include one or more power supplies 1326, one or more wired or wireless network interfaces 1350, one or more input/output interfaces 1358, and/or one or more operating systems, such as Windows Server^{™}, Mac OS X^{™}, Unix^{™}, Linux^{™}, and FreeBSD^{™}.

Operations performed by the server in the foregoing embodiments may be based on the structure of the server shown in FIG. 10.

The CPU 1322 is configured to perform the operations in the model rendering method described in the foregoing embodiments.

Embodiments of this application further provide a computer-readable storage medium, configured to store a computer program, the computer program being configured to perform the operations in the model rendering method described in the foregoing embodiments.

An embodiment of this application further provides a computer program product including a computer program. When the computer program product is run on a computer, the computer is enabled to perform the method according to the foregoing embodiments.

A person skilled in the art can clearly understand that for convenience and conciseness of description, for specific working processes of the foregoing systems, apparatuses, and units, refer to the corresponding processes in the foregoing method embodiments, and details are not described herein again.

In several embodiments provided in this application, the disclosed system, apparatus, and method may be implemented in another manner. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit. The integrated unit may be implemented in the form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the related technology, or all or some of the technical solutions may be implemented in the form of a software product. The computer software product is stored in a storage medium and includes several instructions for instructing a computer device (which may be a personal computer, a server, a network device, or the like) to perform all or some of the operations of the methods described in the embodiments of this application. The foregoing storage medium includes any medium that can store a computer program, such as a USB flash drive, a removable hard disk, a read-only memory (ROM), a random access memory (RAM), a magnetic disk, or an optical disc.

In this application, "at least one" refers to one or more, and "a plurality of" refers to two or more. The term "and/or" is used to describe an association relationship between associated objects and indicates that three relationships may exist. For example, "A and/or B" may indicate the following three cases: only A exists, only B exists, and both A and B exist. A and B may be singular or plural. A character "/" generally indicates an "or" relationship between the associated objects. "At least one of the following" or a similar expression thereof refers to any combination of these items, including one item or any combination of a plurality of items. For example, at least one of a, b, or c may represent a, b, c, "a and b", "a and c", "b and c", or "a, b, and c", where a, b, and c may be singular or plural.

The foregoing embodiments are merely intended for describing the technical solutions of this application, but not for limiting this application. Although this application is described in detail with reference to the foregoing embodiments, a person of ordinary skill in the art is to understand that they may still make modifications to the technical solutions described in the foregoing embodiments or make equivalent replacements to some technical features thereof, without departing from the spirit and scope of the technical solutions of the embodiments of this application.

## Claims

1. A model rendering method, performed by a computer device, and the method comprising:
performing, based on a topological feature of an initial three-dimensional model, simplification processing on the initial three-dimensional model by reducing a mesh quantity of the three-dimensional model, to obtain a simplified three-dimensional model, the simplified three-dimensional model and the initial three-dimensional model satisfying a preset similarity condition;
determining, through illumination simulation processing when the simplified three-dimensional model is in a preset virtual environment, an illumination intensity corresponding to each vertex in the simplified three-dimensional model; and
rendering the simplified three-dimensional model based on the simplified three-dimensional model and the illumination intensity corresponding to each vertex, to obtain a model image corresponding to the simplified three-dimensional model.

2. The method according to claim 1, wherein the performing, based on a topological feature of an initial three-dimensional model, simplification processing on the initial three-dimensional model by reducing a mesh quantity of the three-dimensional model, to obtain a simplified three-dimensional model comprises:
performing, based on the topological feature of the initial three-dimensional model, the simplification processing on the initial three-dimensional model by reducing the mesh quantity of the three-dimensional model, to obtain a simplified candidate three-dimensional model;
performing difference measurement processing on the simplified candidate three-dimensional model, the difference measurement processing comprising: determining, according to a visual quality evaluation result and a performance evaluation result that correspond to the simplified candidate three-dimensional model, and a visual quality evaluation result and a performance evaluation result that correspond to the initial three-dimensional model, whether the simplified candidate three-dimensional model and the initial three-dimensional model satisfy the preset similarity requirement; and
determining the simplified candidate three-dimensional model as the simplified three-dimensional model if the simplified candidate three-dimensional model and the initial three-dimensional model satisfy the preset similarity requirement, and performing the simplification processing again if the simplified candidate three-dimensional model and the initial three-dimensional model do not satisfy the preset similarity requirement, to obtain a new simplified candidate three-dimensional model, and performing the difference measurement processing on the new simplified candidate three-dimensional model.

3. The method according to claim 2, wherein the initial three-dimensional model comprises a plurality of sub-model regions, and the performing, based on a topological feature of an initial three-dimensional model, simplification processing on the initial three-dimensional model by reducing a mesh quantity of the three-dimensional model, to obtain a simplified three-dimensional model comprises:
for each sub-model region: determining, an importance evaluation result of the sub-model region based on a topological feature of the sub-model region, and determining, according to the importance evaluation result, a quantity of to-be-reduced meshes corresponding to the sub-model region; and performing region simplification processing on the sub-model region according to the quantity, to obtain a simplified sub-model region corresponding to the sub-model region; and
determining the simplified candidate three-dimensional model according to simplified sub-model regions respectively corresponding to the plurality of sub-model regions.

4. The method according to claim 3, wherein the topological feature of the sub-model region is determined by:
determining the topological feature of the sub-model region through a scale-invariant feature transformation algorithm according to position data of vertexes in the sub-model region and respective map fragments associated with the vertexes.

5. The method according to claim 3 or 4, wherein the determining an importance evaluation result of the sub-model region based on a topological feature of the sub-model region comprises:
determining a visual quality evaluation result and a geometrical quality evaluation result of the sub-model region based on the topological feature of the sub-model region, wherein the visual quality evaluation result is configured for representing an impact degree of a quantity change of meshes in the sub-model region on a map effect corresponding to the sub-model region, and the geometrical quality evaluation result is configured for representing an impact degree of the quantity change of meshes in the sub-model region on a region shape of the sub-model region; and
determining the importance evaluation result of the sub-model region according to the visual quality evaluation result and the geometrical quality evaluation result.

6. The method according to any one of claims 3 to 5, wherein the determining, according to a visual quality evaluation result and a performance evaluation result that correspond to the simplified candidate three-dimensional model, and a visual quality evaluation result and a performance evaluation result that correspond to the initial three-dimensional model, whether the simplified candidate three-dimensional model and the initial three-dimensional model satisfy the preset similarity requirement comprises:
determining a first visual quality difference between the simplified candidate three-dimensional model and the initial three-dimensional model according to a region visual quality difference corresponding to each region pair, the region pair comprising a simplified sub-model region and a sub-model region that have a correspondence, and the region visual quality difference being determined according to respective visual quality evaluation results of the simplified sub-model region and the sub-model region in the region pair;
determining a second visual quality difference according to respective visual quality evaluation results of the simplified candidate three-dimensional model and the initial three-dimensional model;
determining a performance difference according to respective performance evaluation results of the simplified candidate three-dimensional model and the initial three-dimensional model; and
determining, according to the first visual quality difference, the second visual quality difference, and the performance difference, whether the simplified candidate three-dimensional model and the initial three-dimensional model satisfy the preset similarity requirement.

7. The method according to any one of claims 1 to 6, wherein the determining, through illumination simulation processing when the simplified three-dimensional model is in a preset virtual environment, an illumination intensity corresponding to each vertex in the simplified three-dimensional model comprises:
performing clustering processing on vertexes in the simplified three-dimensional model, to determine a plurality of representative vertexes in the simplified three-dimensional model;
performing space transformation processing on the plurality of representative vertexes, to determine respective positions of the plurality of representative vertexes in projection space;
determining, through the illumination simulation processing based on the respective positions of the plurality of representative vertexes in the projection space, illumination intensities respectively corresponding to the plurality of representative vertexes when the simplified three-dimensional model is positioned in the preset virtual environment; and
determining, according to the illumination intensities respectively corresponding to the plurality of representative vertexes, illumination intensities respectively corresponding to the vertexes in the simplified three-dimensional model.

8. The method according to claim 7, wherein the performing space transformation processing on the plurality of representative vertexes, to determine respective positions of the plurality of representative vertexes in projection space comprises:
obtaining, through performing transformation based on respective positions of the plurality of representative vertexes in model space, respective positions of the plurality of representative vertexes in world space;
obtaining, through performing transformation based on the respective positions of the plurality of representative vertexes in the world space, respective positions of the plurality of representative vertexes in view space; and
obtaining, through performing transformation based on the respective positions of the plurality of representative vertexes in the view space, respective positions of the plurality of representative vertexes in the projection space.

9. The method according to claim 7 or 8, wherein the determining, through the illumination simulation processing based on the respective positions of the plurality of representative vertexes in the projection space, illumination intensities respectively corresponding to the plurality of representative vertexes when the simplified three-dimensional model is positioned in the preset virtual environment comprises:
for each representative vertex: determining, according to a position of the representative vertex in the projection space, a normal direction, a reflection vector, and a line-of-sight direction that correspond to the representative vertex; and determining an illumination intensity corresponding to the representative vertex according to a simulated light intensity, a diffuse light intensity, a reflected light intensity, a light source direction, and a highlight index that correspond to the preset virtual environment, as well as the normal direction, the reflection vector, and the line-of-sight direction.

10. The method according to any one of claims 1 to 9, wherein the method further comprises:
performing rendering enhancement processing in a process of rendering the simplified three-dimensional model, wherein the rendering enhancement processing comprises at least one of: high-frequency detail enhancement processing, light tracing processing, ambient light occlusion processing, and dynamic blur processing on a motion region in the simplified three-dimensional model.

11. The method according to claim 10, wherein the high-frequency detail enhancement processing is implemented by:
extracting, based on a Gaussian blur function, a target vertex belonging to a high-frequency detail region from vertexes comprised in the simplified three-dimensional model; and
performing, based on the target vertex, image enhancement processing on a map associated with the simplified three-dimensional model.

12. The method according to claim 10, wherein the light tracing processing is implemented by:
for each pixel in the model image to be obtained: determining, a reflected light corresponding to the pixel; and determining, through a light tracing function according to the reflected light corresponding to the pixel and a light intensity of the reflected light, a color value corresponding to the pixel.

13. The method according to claim 10, wherein the ambient light occlusion processing is implemented by:
for each pixel in model image to be obtained, determining, according to a visible relationship between the pixel and each vertex in the simplified three-dimensional model, an ambient light occlusion value corresponding to the pixel.

14. The method according to claim 10, wherein the dynamic blur processing is implemented by:
for each pixel corresponding to the motion region in the model image to be obtained, determining, according to a model motion speed at each dynamic sampling moment and a time interval between every two adjacent dynamic sampling moments, a dynamic blur value corresponding to the pixel.

15. A model rendering apparatus, comprising:
a simplification module, configured to perform, based on a topological feature of an initial three-dimensional model, simplification processing on the initial three-dimensional model by reducing a model mesh quantity, to obtain a simplified three-dimensional model, the simplified three-dimensional model and the initial three-dimensional model satisfying a preset similarity requirement;
an illumination simulation module, configured to determine, through illumination simulation processing when the simplified three-dimensional model is in a preset virtual environment, an illumination intensity corresponding to a vertex in the simplified three-dimensional model; and
a rendering module, configured to render the simplified three-dimensional model based on the simplified three-dimensional model and the illumination intensity, to obtain a model image corresponding to the simplified three-dimensional model.

16. A computer device, comprising a processor and a memory,
the memory being configured to store a computer program; and
the processor being configured to perform, according to the computer program, the model rendering method according to any one of claims 1 to 14.

17. A computer-readable storage medium, the computer-readable storage medium being configured to store a computer program, and the computer program, when executed by an electronic device, implementing the model rendering method according to any one of claims 1 to 14.

18. A computer program product, comprising a computer program, the computer program, when executed by a processor, implementing the model rendering method according to any one of claims 1 to 14.
